# NEUE EUROPÄISCHE PATENTSCHRIFT

(11) **EP 0 652 824 B2**
(45) Veröffentlichungstag und Bekanntmachung des Hinweises auf die Entscheidung über den Einspruch: **25.04.2001**
(45) Hinweis auf die Patenterteilung: 22.01.1997
(21) Anmeldenummer: 94915500.6
(22) Anmeldetag: 31.05.1994
(51) Int. Cl.: B30B 11/00, B30B 11/24, A23N 17/00

(54) **SCHNECKENPRESSE**
WORM EXTRUDER
EXTRUDEUSE A VIS

(30) Priorität: 02.06.1993 CH 164093
(43) Veröffentlichungstag der Anmeldung: 17.05.1995
(73) Patentinhaber: BUEHLER AG, 9240 Uzwil (CH)
(72) Erfinder: FROIDEVAUX, Pierre-Alain, CH-8592 Uttwil (CH); WETZEL, Willi, CH-9240 Uzwil (CH); RUTISHAUSER, Stefan, CH-9000 St. Gallen (CH)
(86) Internationale Anmeldenummer: CH9400101
(87) Internationale Veröffentlichungsnummer: WO9427811

(56) Entgegenhaltungen:
- EP-A- 0 040 406
- EP-A- 0 085 507
- EP-A- 0 095 168
- EP-A- 0 212 629
- EP-A- 0 227 418
- EP-A- 0 428 978
- EP-A- 0 608 196
- EP-B- 0 266 403
- EP-B- 0 331 207
- WO-A-81/03076
- GB-A- 2 181 559
- US-A- 3 255 220
- US-A- 4 721 448
- US-A- 4 767 301
- Judson M. Harper: "Extrusion of Foods", vol. I, CRC Press, Boca Raton, Florida, 1981, P. 120-126, 131

## Beschreibung

Die Erfindung bezieht sich auf eine Vorrichtung gemäss dem Oberbegriff des Anspruchs 1.

Eine derartige Vorrichtung ist aus der europäischen Patentanmeldung mit der Veröffentlichungsnummer 0 428 978 A1 bekannt.

Darin wurden in erster Linie Massnahmen beschrieben, um einerseits bessere Formteile zu erhalten als im darin erwähnten Stand der Technik und andererseits Verschleissteile so zu gestalten, dass eine rationelle und wirtschaftliche Auswechselbarkeit dieser Verschleissteile besteht.

Die US-A-4,767,301 offenbart insbesondere die Einstellung der Dampfzufuhr in einer Schneckenpresse.

Die EP-A-0 040 406 betrifft ein Verfahren zum Steuern einer Futterwürfelpressanlage und eine Futterwürfelpressanlage, welche eine Futterwürfelpresse mit einer Pressbohrung aufweisenden Pressform enthält, mit welcher drehbare Pressrollen zum Anpressen des auf die Pressform eingegebenen Produktes radial nach aussen durch die Pressbohrungen zusammen wirken.

Der Erfindung liegt die Aufgabe zugrunde, eine gattungsgemässe Vorrichtung so zu gestalten, dass Mittel vorgesehen sind, um den Zustand und/oder die Eigenschaften des Produktes an vorgegebene Soll-Werte anzupassen.

Erfindungsgemäss wird die Aufgabe durch das Kennzeichen des Anspruchs 1 gelöst.

Grundsätzlich bildet die vorgenannte EP 0 428 978 A1 dort ein integrierender Bestandteil dieser neuen Anmeldung, wo es sich bei dieser Anmeldung um eine Fortsetzung der Entwicklung der EP 0 428 978 A1 handelt.

Der Vorteil der Erfindung liegt darin, dass damit besser und rationeller auf Wünsche der Futtermittelkunden in Bezug auf Form und Eigenschaften der gewünschten Produkt eingegangen werden kann.

Im folgenden wird die Erfindung anhand von Beispielen mit Bezug auf die beiliegenden Zeichnungen näher erläutert.

Es zeigt:
- Fig. 1: den Kopfteil einer Pressschnecke, zum Bilden von Formlingen, teilweise im Schnitt dargestellt;
- Fig. 2: einen Querschnitt durch die Fig. 1, gemäss den Schnittlinien I - I;
- Fig. 3: ein Detail aus Fig. 1 mit einer Variante davon;
- Fig. 4: eine Variante des Kopfteiles von Fig. 1;
- Fig. 5: einen Querschnitt des Kopfteiles von Fig. 4 gemäss den Schnittlinien II;
- Fig. 6: eine weitere Variante des Kopfteiles von Fig. 1;
- Fig. 7: einen Querschnitt durch den Kopfteil von Fig. 6, gemäss den Schnittlinien III;
- Fig. 8: eine Variante des Kopfteiles von Fig. 6;
- Fig. 9: eine weitere Variante des Kopfteiles von Fig. 1;
- Fig. 10, 19, 20 und 21: je eine Variante des Kopfteiles von Fig. 9;
- Fig. 11: einen Kopfteil einer Schneckenpresse, im Längsschnitt und halbschematisch dargestellt;
- Fig. 11a: einen Querschnitt des Kopfteiles von Fig. 11, entsprechend der Schnittlinien IV;
- Fig. 12: eine Variante des Kopfteiles von Fig. 11;
- Fig. 13: eine erfindungsgemässe Variante, mindestens eines Teiles einer Schneckenpresse vor dem Kopfteil der Schneckenpresse;
- Fig. 14: eine Variante des Schneckenpressenteiles von Fig. 13;
- Fig. 15: eine Anwendungsart des Schneckenteiles von Fig. 14 dar;
- Fig. 16: eine weitere Anwendungsart des Schneckenteils von Fig. 14;
- Fig. 16A: einen Querschnitt durch den Schneckenteil von Fig. 16, gemäss den Schnittlinien V;
- Fig. 17: Blockschema einer Stell- und Steueranlage;
- Fig. 18: Blockschema zur Anzeige der Verfahrensweise;
- Fig. 22, 23, 24 und 25: je eine Variante des Blockschemas von Fig. 17

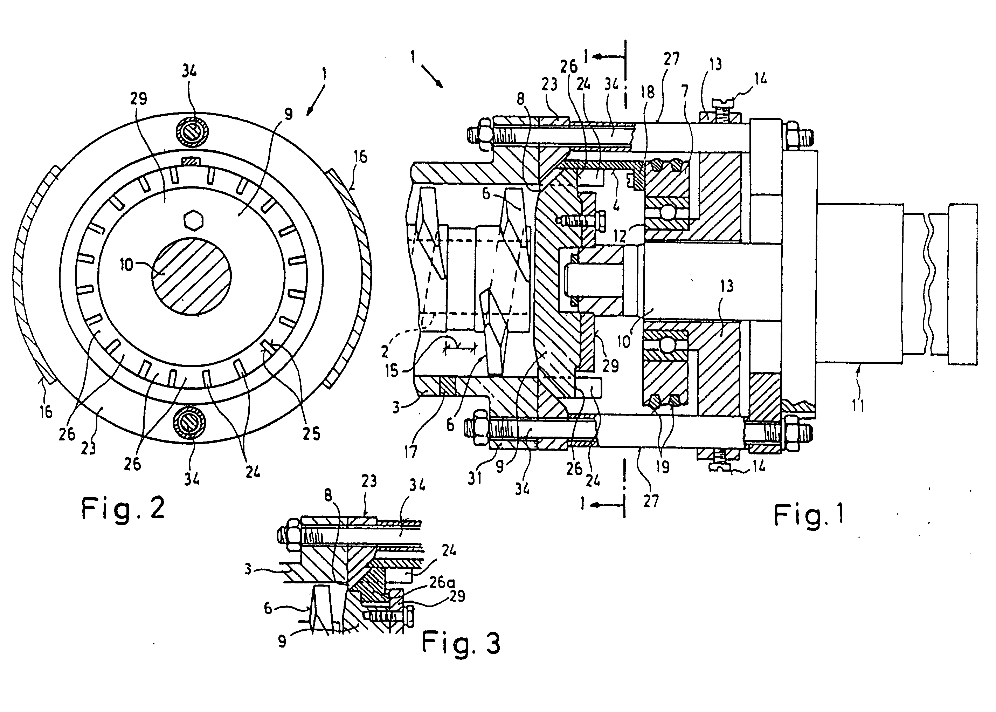

Die Fig. 1 und 2 zeigen eine Schneckenpresse 1, davon im wesentlichen den Kopfteil, in welchem das Produkt geformt wird und als Formling aus dem Kopf ausscheidet, beispielsweise nach unten, mit Blick auf Fig. 1 gesehen.

Eine solche Schneckenpresse kann auch als Expander verwendet werden, in dem während des Knetens und Förderns des Produktes ein Ueberdruck im Produkt erzeugt wird, der in der Atmosphäre, d.h. beim Austritt aus dem Pressenkopf expandiert und die entsprechenden Eigenschaften eines solchen Formlings aufweisen.

Grundsätzlich handelt es sich jedoch um eine Vorrichtung, in welcher ein Produkt geknetet und gefördert und in einer vorgegebenen Weise mit Dampf und/oder Wasser beschickt wird, um dadurch aus einem mehligen Produkt einen Formling herzustellen. In der nachfolgenden Beschreibung werden Massnahmen beschrieben, welche einerseits das Formen des Produktes zu den genannten Formlingen betrifft und anderseits Massnahmen, um den Kneteffekt im Bereich vor dem Kopfteil zu beeinflussen, um in Kombination mit den Formen der Formlinge im Pressenkopf ein Produkt zu erhalten, welches den Ansprüchen der Käufer dieser Formlinge bzw. den Verwertern dieser Formlinge bei einer optimalen Ausnutzung des Futters verhilft.

Die Schneckenpresse weist eine Schneckenwelle 2 mit Knetwerkzeugen 6 auf, welche in einem Gehäuse 3 dreh- und antreibbar gelagert ist.

Die Knetwerkzeuge sind Elemente zwischen welchen ein Freiraum 15 vorgesehen ist, in welchem, wie später beschrieben wird, weitere stationäre Knetwerkzeuge eingesetzt werden können.

Am Gehäuse 3 sind einerseits Temperaturfühler 16 sowie mindestens ein Druckfühler 17 vorgesehen. Die Signale dieser beiden Fühler werden, wie später beschrieben, in Kombination mit anderen Merkmalen verwendet, um das Endprodukt zu beeinflussen.

Das Gehäuse 3 weist einen Gehäuseflansch 31 auf, an welchen ein Zwischenzahnring 23 angeschlossen ist, welcher Zwischenzähne 24 aufweist, die in Nuten mit den Nutenwänden 25 greifen, um dadurch Durchtrittsöffnungen 8 zu bilden.

Die Elemente zwischen den, durch die Nutenwände 25 begrenzten Nuten werden als Zähne 26 be- und gekennzeichnet.

Die Nuten und Zähne 26 sind Teile an der Peripherie eines Gegendruckgliedes 9, welches stationär an einer Kolbenstange 10 sitzt, welche Teil einer Kolben-Zylinder-Einheit 11 und dadurch verschiebbar ist.

Das Gegendruckglied 9 ist gegen Verdrehen durch die Zwischenzähne 24 gesichert, indem diese einerseits Teil des stationären Zwischenzahn-Ringes sind und anderseits in die durch die Nutenwände 25 begrenzten Nuten greifen.

Das Gegendruckglied 9 ist fest mit einer Halteplatte 29 verbunden, die ihrerseits fest mit der Kolbenstange 10 verbunden ist.

Ein an den Austrittsmündungen der Durchtrittsöffnungen 8 vorbeibewegtes Messer 4 ist mittels eines Messerfusses 18 an einem Tragring 7 befestigt, der mittels Wälzlager 12 dreh- und antreibbar auf einem Tragkörper 13 sitzt, der von Verbindungsholmen 27 aufgenommen und darauf mittels Stellschrauben 14 feststellbar ist.

Durch die Verschieb- und Feststellbarkeit des Tragkörpers 13 besteht die Möglichkeit, das Messer 4 genau zu positionieren, um dadurch ein sauberer Schnitt der Formlinge zu erhalten. Der Tragring 7 wird über Keilriemen 19 von einem Antrieb (nicht gezeigt) angetrieben, der eine variabel gesteuerte Drehzahl aufweist.

Die Fig. 3 zeigt insofern eine Variante des Kopfes von Fig. 1 und 2, als die Zähne 26a austauschbar sind. Dabei sind die Zähne 26a durch die Halteplatte 29 in ihrer Lage festgehalten.

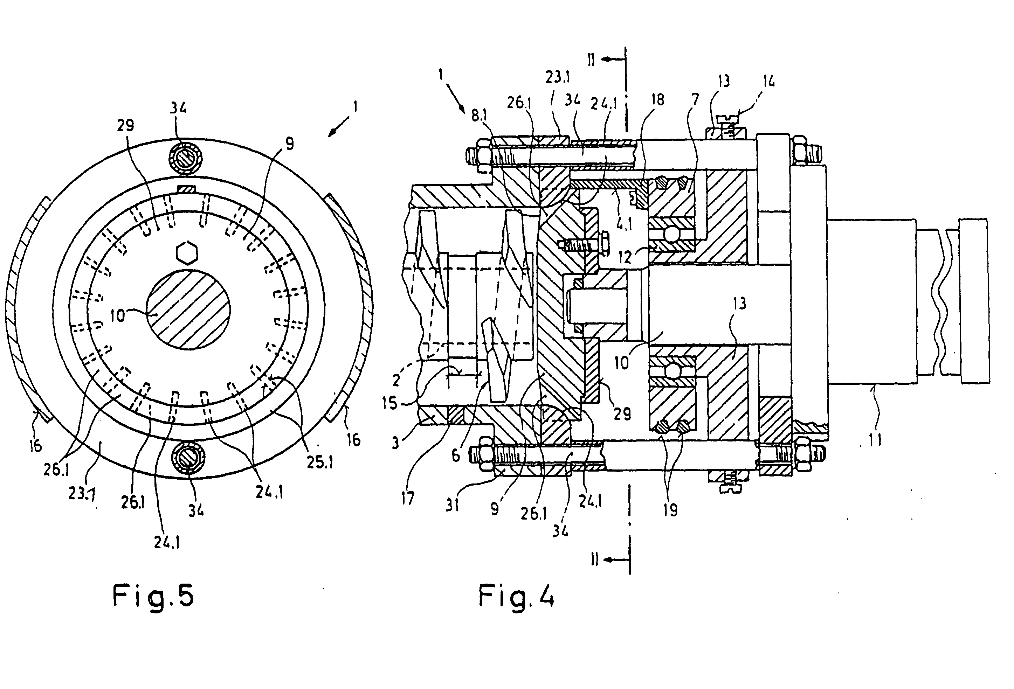

Die Fig. 4 zeigt gegenüber der Fig. 3 eine Variante 8.1 der Durchtrittsöffnung, in dem diese verjüngt ist gegenüber der Durchtrittsöffnung 8 der Fig. 1, welche einen gleichbleibenden Querschnitt von der Eingangsmündung bis zur Austrittsmündung aufweist. Dementsprechend sind die Zähne 24.1 des Zwischenzahnringes 23.1 mit einer Wölbung versehen, und die Zwischenzähne 24.1 greifen in die Nuten mit den Nutenwänden 25.1 ein, um dadurch die Durchtrittsöffnung in diesen Bereich derart zu dichten, dass das Produkt an der Austrittsmündung der Durchtrittsöffnung 8.1 im Querschnitt, dem Querschnitt der Austrittsmündung entspricht.

Das Messer 4.1 ist entsprechend geformt, wird jedoch, wie für Fig. 1 beschrieben, getragen und bewegt.

Die weiteren Elemente entsprechen dem Elementen der Fig. 1 bzw. 2 und weisen dementsprechend dieselben Bezugszeichen auf und sind deshalb nicht weiter beschrieben.

Die Fig. 5 zeigt einen Querschnitt von Fig. 4 entsprechend den Schnittlinien II in Fig. 4.

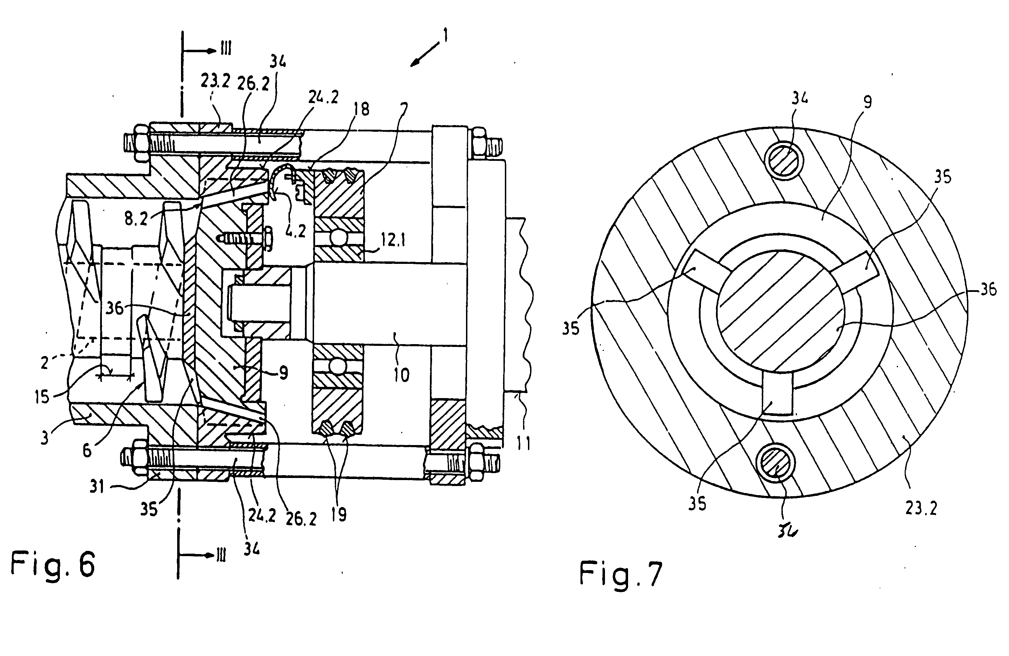

Die Fig. 6 zeigt insofern eine Variante gegenüber den Fig. 1 und 4 auf, als hier zwischen dem Ende der Schneckenwelle 2 und dem Gegendruckglied ein Staudruckzahnkörper 36 vorgesehen ist, welchem drei Staudruckzähne 35 zugeordnet sind. Grundsätzlich können mehr oder weniger als drei Staudruckzähne vorgesehen werden, was von der Art des Produktes abhängt, da diese Staudruckzähne vor der Eingangsmündung der Durchtrittsöffnung 8.2 vorbeibewegt werden und dabei für diesen Moment diese Mündung verschliessen, so dass das nachgeförderte Produkt für diesen Moment höher verdichtet wird als vorher und nachher.

Der Staudruckzahnträger 36 ist fest mit dem Ende der Schneckenwelle 2 verbunden und dreht entsprechend synchron mit dieser.

Im weiteren entspricht der Zwischenzahn-Ring 23.2 und die Zwischenzähne 24.2 sowie die Zähne 26.2 im Prinzip den mit Fig. 4 gezeigten Zähnen 26.1 jedoch nicht mit der in Fig. 4 gezeigten Wölbung der Zähne 24.1, sondern einer leichten Verjüngung der Durchtrittsöffnung 8.2. Anstelle einer solchen Verjüngung kann jedoch ebenfalls ein gleichbleibender Querschnitt vorgesehen werden.

Anstelle des Messers 4.1 der Fig. 4 ist hier ein Messer 4.2 vorgesehen, welches in Form einer Feder mit den Messerfuss 18 verbunden ist, und wie bereits vorbeschrieben, mittels des Tragringes 7 dreht.

Im Gegensatz zum Wälzlager 12 der Fig. 1 und 4, ist das Wälzlager 12.1 direkt auf der Kolbenstange 10 fest und bewegt sich dementsprechend zusammen mit dem Gegendruckglied 9.

Die weiteren Elemente entsprechen den bereits früher Beschriebenen und sind dementsprechend nicht weiter beschrieben.

Die Fig. 7 zeigt einen Querschnitt von Fig. 6 entsprechend den Schnittlinien III in Fig. 6.

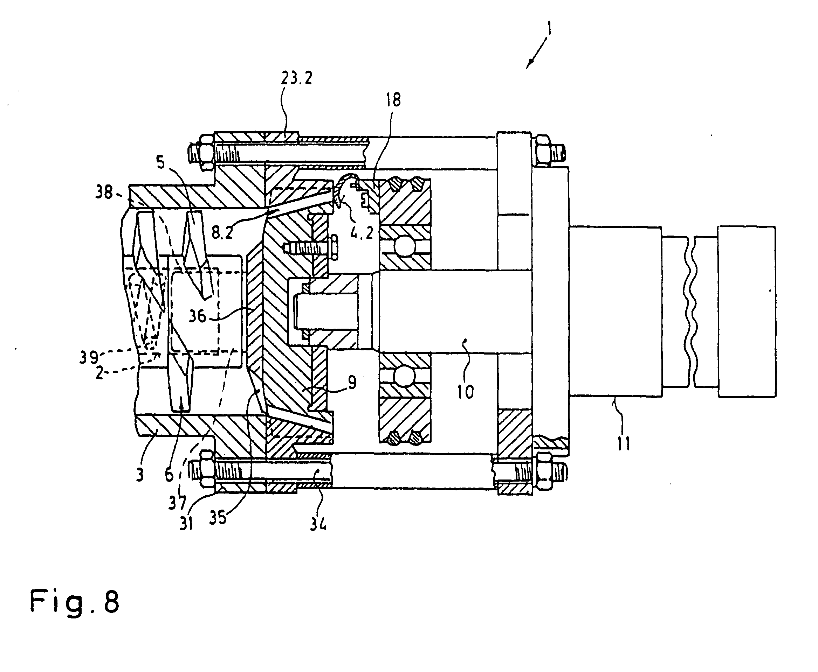

Die Fig. 8 zeigt insofern eine Variante gegenüber der Fig. 6 als der Staudruckzahnträger 36 nicht fest mit dem Ende der Schneckenwelle 2 verbunden ist, sondern mit einer Welle 37, die verschiebbar in der Schnekkenwelle 2 vorgesehen ist. Ein Mitnehmerkeil 38 bildet die Verbindung zwischen der Welle 37 und der Schnekkenwelle 2 in Umfangsrichtung, d.h. verursacht, dass der Staudruckzahnträger 36 synchron mit der Schnekkenwelle 2 dreht. Hingegen gestattet der Mitnehmerkeil 38 bzw. eine entsprechende Nute in der Welle 37, dass der Staudruckzahnträger 36 in der Schneckenwelle 2 axial verschiebbar ist. Um zu garantieren, dass der Staudruckzahnträger 36 bzw. die Staudruckzähne 35 auch bei Bewegung des Gegendruckgliedes 9 aufgrund einer gewollten Vergrösserung des Querschnittes der Durchtrittsöffnung 8.2 mitwandern, ist eine Druckfeder 39 in der Schneckenwelle 2 vorgesehen, welche dafür sorgt, dass der Staudruckzahnträger 36 mit einem vorgegebenen Druck am Gegendruckglied 9 anliegt.

Die weiteren Elemente entsprechen dem bisher Beschriebenem und werden nicht nochmals beschrieben.

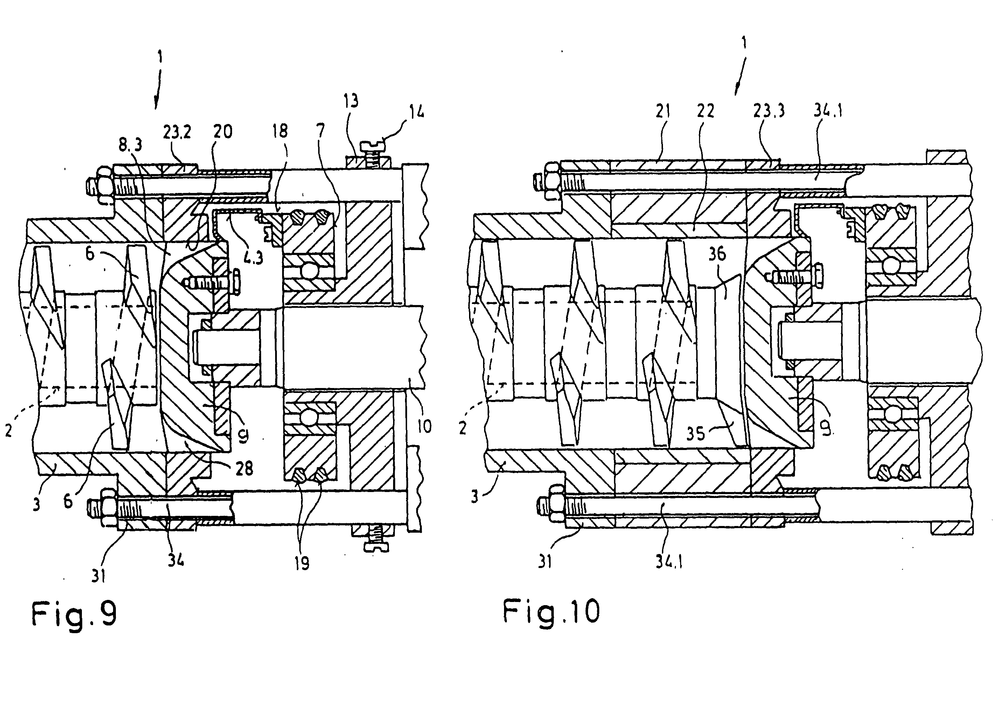

Die Fig. 9 zeigt eine weitere Variante der Durchtrittsöffnung 8 und ist dementsprechend mit 8.3 gekennzeichnet. Aus dieser Figur ist ersichtlich, dass die Durchtrittsöffnung radial, einerseits durch eine Grundfläche 28 einer in das Gegendruckglied 9 gefräste Nute und andererseits durch eine zylindrische Innenfläche 20 des Zwischenzahnringes 23.3 gebildet wird. Dabei ist die Breite der Nute in Umfangsrichtung des Gegendruckgliedes 9 gesehen, im wesentlichen entsprechend der bisher gezeigten Nuten.

Der Vorteil dieser Variante besteht in der einfacheren Ausführungsart der Gestaltung der Durchtrittsöffnung 8.3 gegenüber den vorangehenden Varianten.

Ein Messer 4.3, welches am Fuss 18 befestigt ist, dreht, wie bereits für die Fig. 1 und 4 beschrieben, mittels des Tragringes 7.

Die weiteren Elemente sind bereits beschrieben und deshalb nicht mehr erwähnt.

Die Fig. 10 zeigt insofern eine Variante gegenüber der Fig. 9, als zwischen dem Gehäuseflansch 31 und dem Zwischenzahnring 23.3 ein Zwischenring 21 mit einem Stütz- und Lagerring 22 vorgesehen ist, wobei der letztere als Stütz- und Lagerring für die Knetwerkzeuge 6 dient und dadurch ein Element bietet, welches als Verschleisselement rasch auswechselbar und bezüglich Dimension und Material optimal anpassbar ist.

Wie mit einer späteren Figur gezeigt, können diese Zwischenringe 21 und Stütz- und Lagerringe 22 an vorgegebenen, bzw. gewählten Stellen längs der gesamten Länge der Schnecke vorgesehen werden, um dadurch die Schnecke drehbar zu lagern.

Die weiteren Elemente entsprechen denjenigen der Fig. 9 und werden nicht weiter beschrieben.

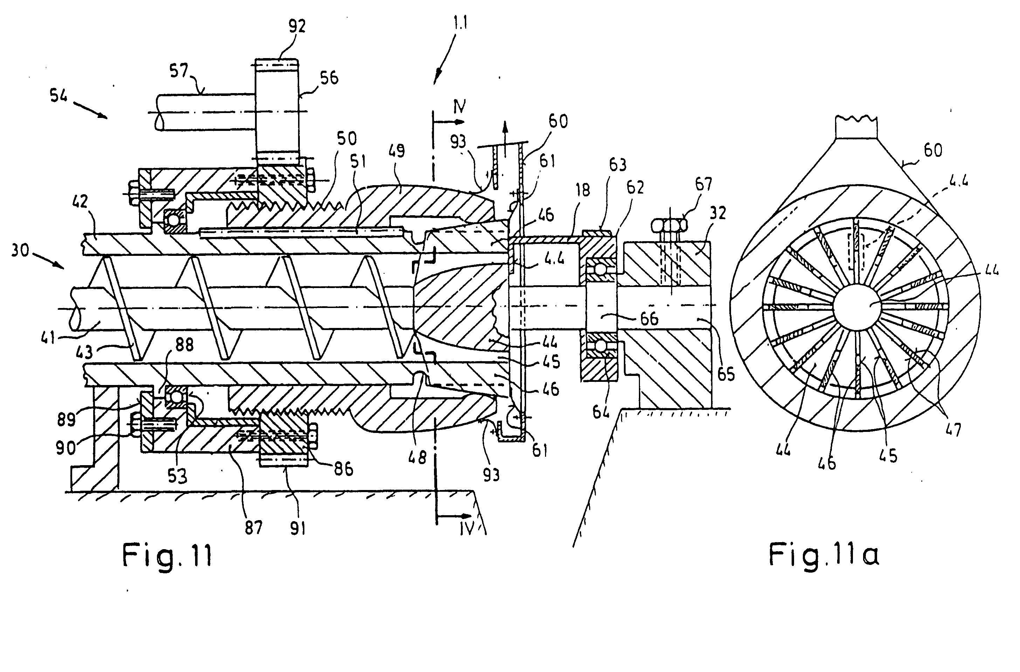

Die Fig. 11 und 11a zeigen eine Schneckenpresse 1.1 mit einer, aus einer Schneckenwelle 41 und einer Schneckenwindung 43 bestehenden Pressschnecke 30, welche in einem Gehäuse 42 dreh- und antreibbar gelagert ist. Am rechten Ende der Pressschnecke 30, mit Blick auf Fig. 11 gesehen, ist berührungslos, jedoch unmittelbar anschliessend, ein Pressstempel 44 vorgesehen, welcher mittels einer zylindrischen Pressstempelstütze 65 in einem Träger 32 stationär angeordnet ist. Zur Fixierung der Pressstempelstütze 65 ist eine Stellschraube 67.

Auf einem Lagerzylinder 66, welcher einen, beispielsweise 2mm grösseren Durchmesser aufweist, als die Pressstempelstütze 65, ist ein Wälzlager 64 aufgezogen, welches zur Aufnahme einer Tragscheibe 62 dient, an welcher der Messerfuss 18 eines Messers 4.4 fest zugeordnet ist.

Die Tragscheibe 62 wird mittels eines Antriebriemens 63 von einem Antrieb (nicht dargestellt) in Drehung versetzt. Im Pressstempel 44 sind Formkanäle 45 vorgesehen, in welche Zwischenstücke 46 greifen, um die Formkanäle 45 radial nach aussen, vom Pressstempel 44 aus gesehen, zu begrenzen.

Die Zwischenstücke 46 sind mittels einer Nute 48 derart elastisch mit dem Gehäuse 42 verbunden, dass mittels einer radialen Bewegung der Zwischenstücke 46 der Querschnitt der Formkanäle 45 verändert werden kann.

Die Formkänale 46 werden durch die Formwände 47 in Umfangsrichtung begrenzt.

Durch die Rotation des Messers 4.4 werden Produktformstücke, welche mit einer vorgegebenen Geschwindigkeit an der Austrittsmündung der Formkanäle 45 austreten, aufgrund einer vorgegebenen Messergeschwindigkeit auf eine vorgegebene Länge abgeschnitten.

Um die Zwischenstücke 46 radial nach innen zu bewegen, ist ein Ring 49 vorgesehen, welcher in axialer Richtung der Förderschnecke auf dem Gehäuse 42 mittels einer Gleitführung verschiebbar ist, und mittels eines zum Ring 49 gehörenden Gewindes 50, und durch einen dazu passenden Gegengewindering 86, welcher in axialer Richtung stationär ist, mittels Drehung des Ringes 86 verschoben.

Um eine Rotation des Ringes 49 zu verhindern ist dieser mittels eines im Gehäuse 42 eingelassenen Führungskeiles 51 geführt.

Der Gewindering 86 ist Bestandteil eines Gewindeantriebes 54, welcher einen Gewinderingträger 87 umfasst, auf welchem der Gewindering 86 befestigt ist, und welcher drehbar auf einem Wälzlager 53 angeordnet ist, welches seinerseits fest auf dem Gehäuse 42 vorgesehen ist.

Damit der Gewinderingträger 87, und damit der Gewindering 86 axial stationär sind, weist das Gehäuse 42 einen Führungsring 88 auf, an welchen einerseits das Wälzlager 53 anliegt und andererseits der Anschlagring 89, welcher mittels einer Schraube 90 mit dem Gewinderingträger 87 verbunden ist.

Der Gewindering 86 wird mittels eines Antriebsritzels 56 angetrieben, das mit den Zähnen 91 des Gewinderinges 86 zusammenpassenden Zähnen 92 versehen ist.

Das Antriebsritzel 56 wird über eine Antriebswelle 57 von einem Antrieb (nicht dargestellt) in Bewegung versetzt.

Zwischen den Formwänden 47 der Formkanäle 45 und den dazwischengreifenden Zwischenstücken 46 ist ein minimales Spiel vorgesehen, welches im wesentlichen ein Austreten von Produkt verhindert, jedoch ein Durchtreten von Luft gestattet.

Um diese durchtretende Luft gezielt mittels Unterdruck abzusaugen, ist eine Absaugeinrichtung 60 am rechten Ende des Ringes 49, mit Blick auf Fig. 11 gesehen, angeordnet.

Dichtungen 61 und 93 sorgen dafür, dass im wesentlichen keine Falschluft durch die Absaugeinrichtung 60 eingesaugt wird.

Mit Hilfe dieser Absaugeinrichtung 60 ist es möglich, den Expandiereffekt des Produktes nach Verlassen des Formkanales 45 zu steuern.

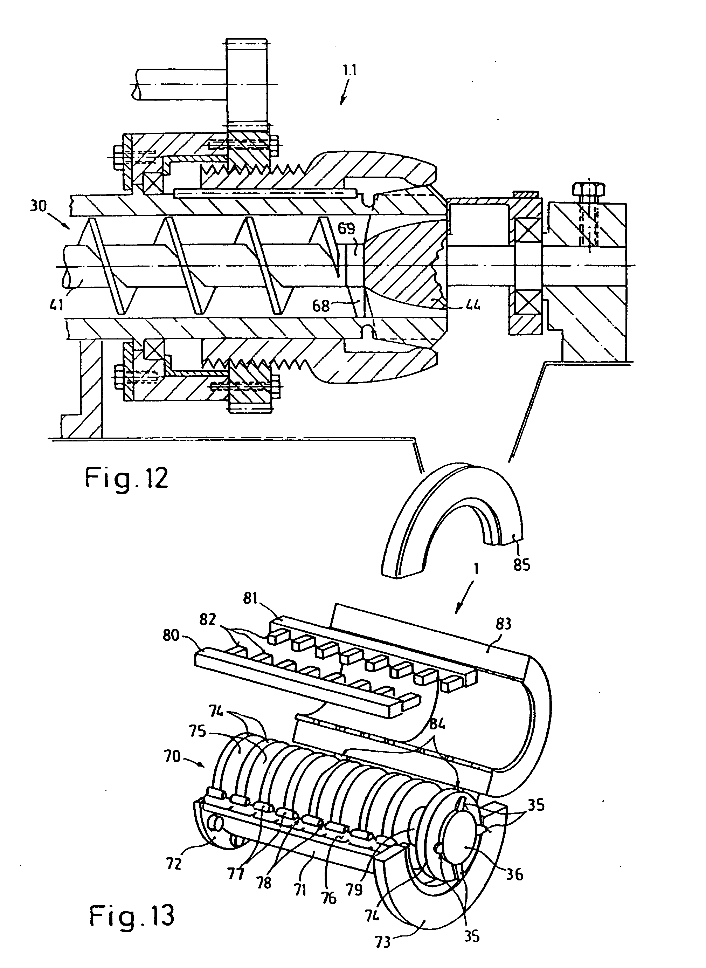

Die Figur 12 zeigt insofern eine Variante zur Fig. 11 und 11a, als zwischen der Pressschnecke 30 und dem Pressstempel 44 ein Staudruckzahnträger 69 vorgesehen ist, an welchem Staudruckzähne 68 angeordnet sind. Diese Staudruckzähne haben dieselbe Funktion wie bereits früher für die Fig. 6 und 7, sowie 8 und 10 beschrieben.

Die weiteren Elemente der Fig. 12 entsprechen den Elementen der Fig. 11 und 11a, worauf diese nicht weiter erwähnt und auch nicht weiter gekennzeichnet sind.

Die Fig. 13 zeigt eine Pressschnecke 70 mit Knetwerkzeugen 74, welche den Knetwerkzeugen 6 der früher beschriebenen Figuren entsprechen, und welche dazwischenliegende Zwischenräume 75 aufweisen. In diese Zwischenräume 75 greifen stationäre Knetelemente 82 ein, welche fest mit einem Stab 80 bzw. 81 verbunden sind, welcher wie mit Fig. 13 gezeigt, aus dem Schneckengehäuse entfernbar sind.

Dazu besteht das Schneckengehäuse aus einer unteren Gehäusehälfte 71, mit Blick auf die Fig. 13 gesehen, und einer oberen Gehäusehälfte 83, welche mittels Scharnieren 84 schwenkbar verbunden sind.

Der Stab 80 liegt, wenn dieser im Gehäuse angeordnet ist, auf einer Auflagefläche 76 auf und die Knetelemente 82 greifen dabei in Zwischenräume 78, welche zwischen Stützelementen 77 vorgesehen sind.

Der Stab 81 ist analog dem Stab 80 auf einer hier nicht sichtbaren Auflagefläche angeordnet, wobei die Knetelemente 82 des Stabes 81 in gleicher Weise in nicht gezeigten Zwischenräume greifen, um in analoger Weise in die Zwischenräume 75 zu ragen.

Die Knetelemente 82 können verschiedene Formen und Längen aufweisen, so dass mittels des Auswechselns der Knetelemente 82 unterschiedliche Kneteffekte erzielbar sind.

Die Knetelemente 74 der Pressschnecke sind in bereits früher beschriebener Weise auf einer Schnekkenwelle 79 angeordnet, an welcher am rechten Ende der Schneckenwelle 79, mit Blick auf die Fig. gesehen, ein Staudruckzahnträger 36 mit Staudruckzähnen 35, vorgesehen ist.

Aus dieser Variante ist ersichtlich, dass die Staudruckzähne nicht in einer Dreieranordnung vorgesehen werden müssen, wie dies mit der Fig. 7 gezeigt ist, sondern auch in anderen, beliebigen, jedoch gleichmässigen Anordnungen.

In ähnlicher Weise, wie die obere Gehäusehälfte 83 aufgeklappt werden kann, kann eine vordere obere Flanschhälfte 85 von einer vorderen unteren Flanschhälfte 73 abgehoben werden.

Die passende obere Flanschhälfte zum hinteren Gehäuseflansch 72 ist hier nicht dargestellt.

Die Begriffe "untere", "obere", "hintere", und "vordere" beziehen sich auf die Blickrichtung auf diese Figur.

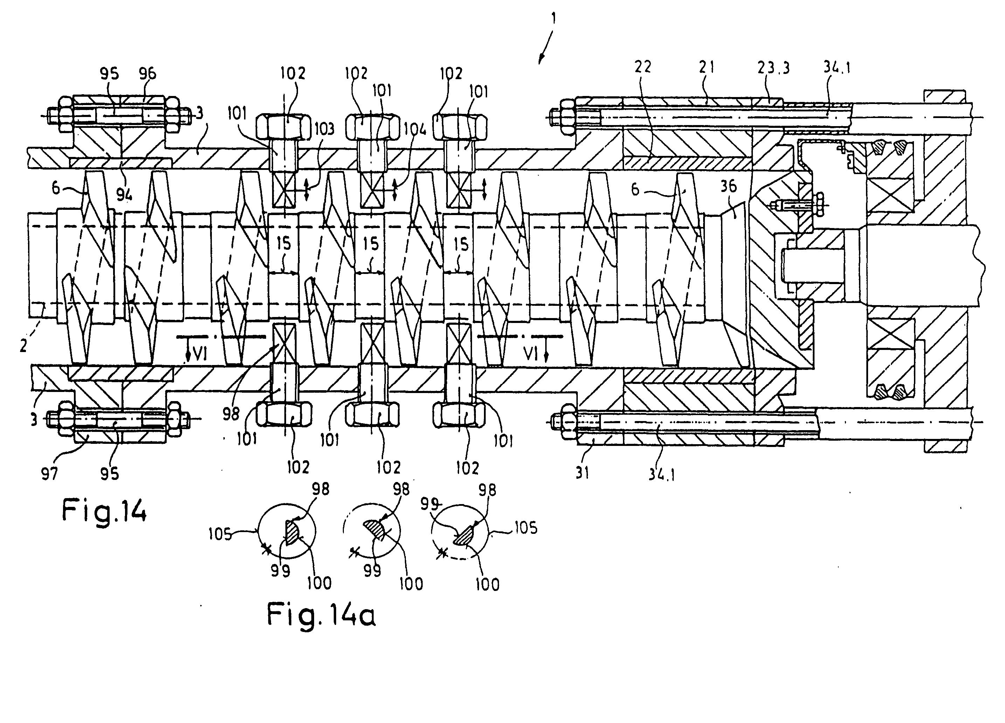

Die Fig. 14 zeigt eine Vorrichtung analog Fig. 10, jedoch verlängert dargestellt, so dass zusätzliche Gehäuseflanschen 96 und 97 und links, mit Blick auf die Fig. gesehen, ein zweiter Gehäuseteil des Gehäuses 3, gezeigt ist.

Die Gehäuseflanschen 96 und 97 werden durch eine Verbindungsschraube 95 zusammengehalten.

Analog zum Stütz- und Lagerring 22 ist in den Flanschen 96 und 97 ein Stütz- und Lagerring 94 vorgesehen, womit dargestellt ist, dass solche Stütz- und Lagerringe mindestens im Bereich der Gehäuseflansche vorgesehen werden können, um die Pressschnecke, wie früher erwähnt, mit den gleichen Merkmalen zu lagern.

Im Gegensatz zu den feststehenden Knetelementen 82 der Fig. 13, sind hier gemäss den Drehrichtungspfeilen 105 drehbare Knetelemente 98 mittels eines Gewindes 101 im Gehäuse 3 eingelassen. An diesen Knetelementen 98 ist ein Drehknopf 102 vorgesehen, um die Drehbewegung gemäss den Drehrichtungspfeilen 105 durchzuführen.

Die drehbaren Knetelemente 98 weisen einerseits eine ebene Knetfläche 99 und andererseits eine konvex gewölbte Knetfläche 100 auf, wobei die Knetfläche 99 beispielsweise auch konkav gewölbt sein kann, was empirisch zu ermitteln ist.

Durch die Möglichkeit, die Knetelemente 98 zu drehen, besteht die Möglichkeit, diese in beliebigen Stellungen, wie dies mit Fig. 14a dargestellt ist, einzustellen und entsprechend dem Gewinde 101 besteht ebenfalls die Möglichkeit die Knetelemente 98 innerhalb eines gegebenen Bereiches in den radialen Richtungen 103 resp. 104 zu verschieben.

Die weiteren Elemente entsprechen den Elementen der Fig. 10 bzw. der früheren Figuren und sind dementsprechend nicht weiter erwähnt und nicht weiter bezeichnet.

Mittels solcher Knetelemente 98 besteht die Möglichkeit eine grosse Variabilität an Kneteffekt in der Schnecke zu erhalten, insbesondere da solche Knetelemente nicht nur an der in Fig. 14 gezeigten Stelle der Schneckenpresse, sondern auch entsprechend der Länge der Schneckenpresse an weiteren Stellen vorzusehen.

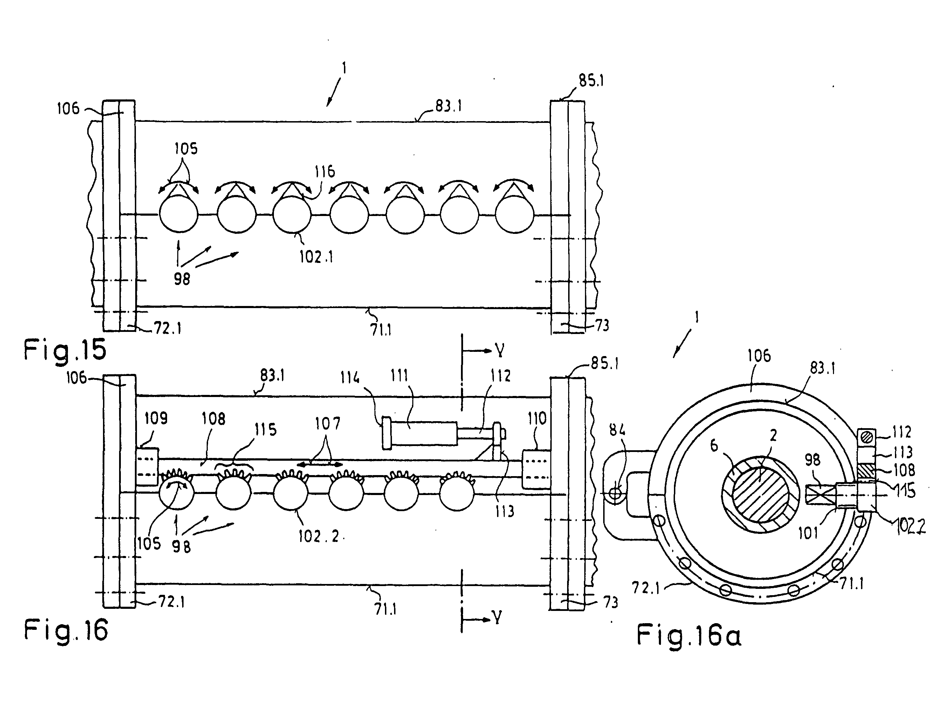

Die Fig. 15 zeigt ebenfalls drehbare Knetelemente, welche auch hier mit 98 gekennzeichnet sind, die analog der Knetelemente der Fig. 14 konzipiert sind mit der Ausnahme, dass der Drehknopf 102.1 zusätzlich ein Anzeigepfeil 116 aufweist, welcher gegen eine Anzeigeskala 105 gerichtet ist.

In dieser Figur ist in analoger Weise zu Fig. 13 das Gehäuse geteilt, jedoch geschlossen dargestellt. Dementsprechend sind die Gehäuseelemente mit einem Index .1 bezeichnet, mit der Ausnahme des oberen Gehäuseflansches 106, welcher in Fig. 13 nicht dargestellt ist.

Die Drehknöpfe 102.1 und damit die Knetelemente 98 werden manuell verstellt und haben dieselbe Wirkung, wie mit Fig. 14 beschrieben.

Die Fig. 16 und 16a zeigen, dasselbe Gehäuse und dieselben Gehäuseflanschen, wie die Fig 15, jedoch sind die drehbaren Knetelemente 98 mit Drehknöpfen 102.2 versehen, denen je ein Zahnkranz 115 zugeordnet ist, der in eine Zahnstange 108 eingreift.

Die Zahnstange 108 ist für Verschiebebewegungen in den Verschieberichtungen 107, in Gleitführungen 109 und 110 verschiebbar gelagert und die Verschiebebewegung der Zahnstange 108 wird mittels eines Verschiebezylinders 111 durchgeführt. Dieser Verschiebezylinder wird von einer Steuerung (hier nicht gezeigt) gesteuert (nicht dargestellt) und ist mittels eines Trägerelementes 114 fest mit der oberen Gehäusehälfte 83.1 verbunden.

Eine zum Verschiebezylinder 111 gehörende Kolbenstange 112 ist fest mit einem Verbindungselement 113 verbunden, welches der Zahnstange 108 fest zugeordnet ist.

In der Fig. 16a ist die Schneckenwelle 2 und die Basis der Knetelemente 6 gekennzeichnet. Ebenso sind die aus Fig. 13 bekannten Scharniere 84 gezeigt.

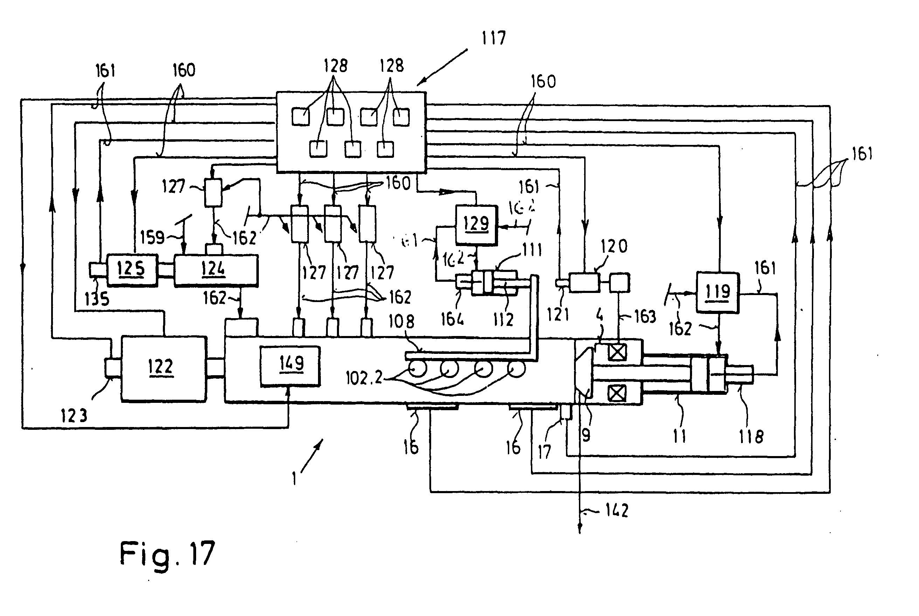

Die Fig. 17 zeigt eine Stell- und Steuerungsanlage 117 zum Betreiben der bisher beschriebenen Mittel, um die Form und die Eigenschaften eines abgegebenen Endproduktes an vorgegebene Werte anzupassen. Beispielsweise kann der Querschnitt des Endproduktes 142 durch Veränderung der Lage des Gegendruckgliedes 9 und die Länge des Produktes durch Veränderung der Umfangsgeschwindigkeit des Messers 4 verändert werden. Im weiteren kann die Knetwirkung der Schnecke durch Aenderung der Drehzahl verändert werden. Eine weitere Möglichkeit die Knetwirkung in der Schnecke zu verändern, besteht in der Verstellung der Knetelemente 98 durch Drehen der Drehknöpfe 102, 102.1 und 102.2 der Figuren 14, 15 und 16.

Im weiteren kann durch vorgegebene Eingabe von Wasser und/oder Dampf oder gegebenenfalls anderen Flüssigkeiten wie Oel, flüssiges Fett oder Melasse mittels der Reguliereinrichtung 127 und vorgegebene Eingabe eines Eingangsproduktes 159 (in der Regel ein Gemisch) durch die Dosiereinheit 124 in Relation zur Eingabe des Wassers und/oder des Dampfes, die Konsistenz des sich in der Schnecke befindlichen Produktes und bei gleicher Drehzahl der Schneckenwelle 2, der Kneteffekt verändert werden.

Die Anlage umfasst deshalb folgende von der Steuerung 117 gesteuerte Elemente:
Ein Kolbenweg-Mess-Sensor 118 zur Wegmessung des Gegendruckgliedes 9;
eine Hydraulikanlage 119 mit entsprechenden Stellelementen, um die von der Steuerung 117 vorgegebene Stellung des Gegendruckgliedes 9 zu veranlassen und einzuhalten;
ein für das Drehen des Messers 4 bis 4.4 drehzahlvariabler Antrieb 120 mit einer Drehzahlüberwachung 121, um die von der Steuerung 117 vorgegebene Drehzahl des Antriebes 120 anzuzeigen;
ein drehzahlvariabler Antrieb 122 mit einer Drehzahlüberwachung 123 für den Antrieb der Schneckenwelle 2, um die von der Steuerung 117 vorgegebene Drehzahl des Antriebes 122 anzuzeigen.

Ausserdem hat die Steuerung 117 eine SOLL-Wert-Eingabe (nicht gezeigt), um die Antriebsleistung des Antriebes 122 vorzugeben und zu überwachen und bei Abweichung zu korrigieren.

Ein weiterer Kolbenweg-Messensor 164 und eine Hydraulikanlage 129 mit Kolbenwegüberwachung und entsprechenden Stellelementen ist zum Betreiben des Verschiebezylinders 111 der Fig. 16 und 16a vorgesehen, um die von der Steuerung 117 vorgegebene Stellung des Kolbens 112 zu veranlassen und einzuhalten.

Reguliereinrichtungen 127 regeln die von der Steuerung 117 vorgegebene Zugabe von Dampf undloder Wasser oder genannte andere Flüssigkeiten in die Schneckenpresse 1 bzw. in die Dosiereinheit 124.

Diese Dosiereinheit 124 dosiert die in die Schnekkenpresse 1 eingegebene Produktmenge (kg/h). Diese Einheit 124 wird von einem ebenfalls der Steuerung 117 angeschlossenen drehzahvariablem Antrieb 125 mit Drehzahlüberwachung 135, angetrieben, dabei dient auch hier die Drehzahlüberwachung 135, um die von der Steuerung vorgegebene Drehzahl des Antriebes 125 einzuhalten.

Im weiteren sind in der Steuerung eine symbolische Anzahl Anzeigemittel 128 vorgesehen zur Anzeige der Produkttemperatur und des Druckes im Produkt, der aufgenommenen Leistung der Schnecke, der Drehzahl der Schnecke, der eingegebenen Produktmenge (kg/h), mittels Drehzahl der Dosiereinheit 124, der eingegebenen Dampf- und/oder Wassermenge (kg/h) und entsprechender Temperatur davon und der Stellung des Kolbens der Zylinderkolbeneinheit für das Gegendruckglied 9, wie auch für die Stellung des Kolbens 112 der Zylinder-Kolben-Einheit für das Stellen der Knetelemente und Anzeige der Drehzahl des Antriebes 120 für das Messer 4. Im weiteren weist die Schneckenpresse Mittel auf, um die Produktmasse im Innern der Schnekkenpresse 1 von aussen zu erwärmen oder zu kühlen. Solche Mittel können an sich bekannte, an der Oberfläche zu befestigende, steuer- oder regelbare Heiz- oder Kühl-Elemente 149 (einfachheitshalber nur mit einem Rechteck dargestellt) sein, die ebenfalls von der Stell- und Steuerungsanlage 117 gesteuert bzw. geregelt werden und einen Einfluss auf die in der Schneckenpresse 1 zu verarbeitende Masse in Bezug auf Konsistenz, Kneteffekt und Mass der Gelatinisierung der Kohlenhydrate bzw. Koagulierung des Eiweisses im zu verarbeitenden Produkt haben.

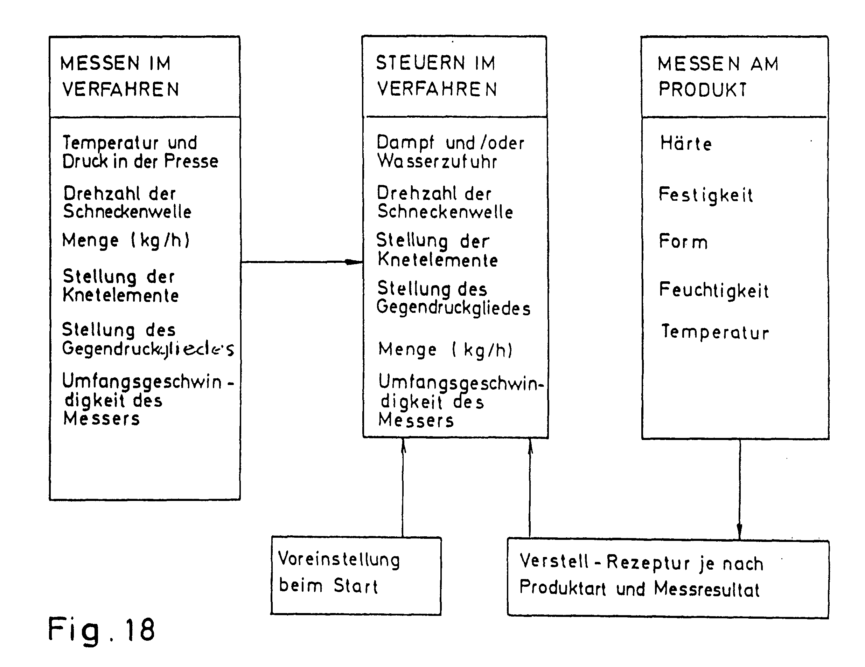

Ebenso sind Einstellmittel mit den Anzeigemitteln 128 kombiniert, um folgende Parameter einzustellen: Temperatur der Heiz- oder Kühlmittel 149,
Soll-wert für aufgenommene Leistung des Antriebsmotores 122 für den Antrieb der Schneckenwelle 2, innerhalb eines Toleranzbereiches, Drehzahl der Schneckenwelle 2,
Drehzahl des Antriebes 125 der Dosiereinheit 124 und damit der Produktmenge (kg/h),
eingegebene Dampf- und/oder Wassermenge oder Menge genannten anderen Flüssigkeiten in die Dosiereinheit 124 und/oder in die Schneckenpresse 1, Stellung des Gegendruckgliedes 9,
Stellung der Knetelemente 98 direkt oder via Stellung des Kolbens 112
und Umfangsgeschwindigkeit des Messers 4.
Es werden einerseits gemäss Fig. 18, während des Betriebes folgende Verfahrensparameter gemessen:
Temperatur und Druck in der Schneckenpresse,
Drehzahl der Schneckenwelle,
eingespeiste Menge des verarbeiteten Produktes in kg/h,
Stellung der Knetelemente 98,
axiale Stellung des Gegendruckgliedes 9 (um die Form
des Endproduktes 142 zu überwachen) und die Drehzahl des Messerantriebes 120 (um dadurch die Umfangsgeschwindigkeit des Messers und damit die Länge des Endproduktes zu überwachen).

Andererseits wird das Produkt im Labor in Bezug auf Härte, Festigkeit, Form, Feuchtigkeit und Temperatur gemessen und die Schneckenpresse 1 entsprechend einer empirisch ermittelten, von den gewünschten Eigenschaften des Endproduktes abhängigen Verstell-Rezeptur gesteuert.

Die von der Steuerund 117 gesteuerten Steuerungsparameter, welche die vorerwähnten gemessenen Eigenschaften des Produktes beeinflussen, sind die Dampfmenge und Dampftemperatur und/oder die Wassermenge und Wassertemperatur, die Drehzahl der Schneckenwelle, die Art und/oder die Stellung der Knetelemente, die Stellung des Gegendruckgliedes 9, die Umfangsgeschwindigkeit des Messers 4, sowie die eingegebene, zu verarbeitende Produktmenge in kg/h.

Für den Start ist eine vorgegebene, empirisch zu ermittelnde Einstellrezeptur vorzusehen, aufgrund welcher ein Produkt primär hergestellt wird, welches gemäss vorbeschriebener Weise gemessen und, falls notwendig, entsprechend durch Aenderung der Steuerungsparameter korrigiert wird.

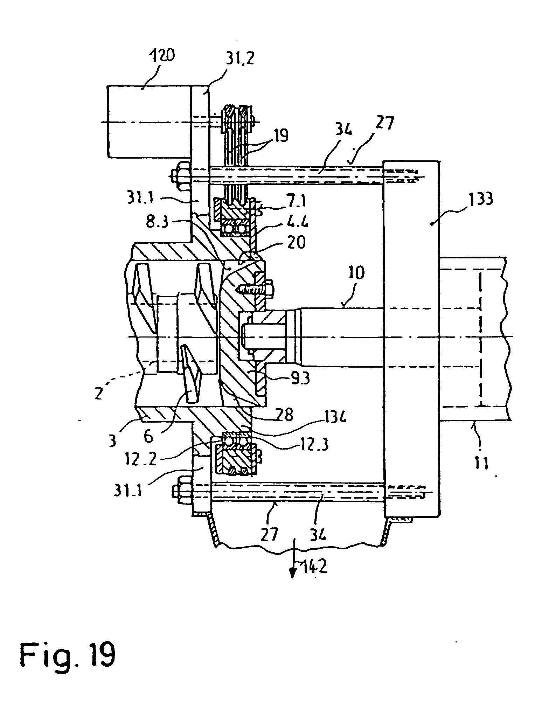

Die Fig. 19 zeigt eine Variante des Antriebes eines an einem Tragring 7.1 befestigten Messers 4.4, welcher an einem zylindrischen Gehäusefortsatz 134 des Gehäuses 3, rechts eines Gehäuseflansches 31.1, mit Blick auf Fig. 19 gesehen, mittels Wälzlagern 12.2 und 12.3 drehbar gelagert ist. Die Lager 12.2 und 12.3 sind auf dem Gehäusefortsatz 134 fest aufgezogen. Das Messer 4.4 schneidet das von der Durchtrittsöffnung austretende Material in das als sogenannte Würfel bezeichnete Endprodukt 142.

Der Antrieb des Tragringes 7.1 erfolgt mittels Keilriemen 19, welche die Leistung des, an einem Gehäuseflanschfortsatz 31.2 befestigten, in der Drehzahl variablen Motors 120 an den Tragring 7.1 übertragen.

Die Kolben-Zylindereinheit 11 ist an einem Tragflansch 133 befestigt, welcher mittels Verbindungsholmen 27 und Schrauben 34 mit dem Gehäuseflansch 31.1 verbunden ist, dabei bildet das Beispiel des Tragflansches 133 ein Beispiel für alle vorangehenden, nicht mehr besonders bezeichneten Tragflanschen der gleichen Kategorie.

Die übrigen, mit bekannten Bezugszeichen versehenen Elemente, entsprechen bereits früher Beschriebenem.

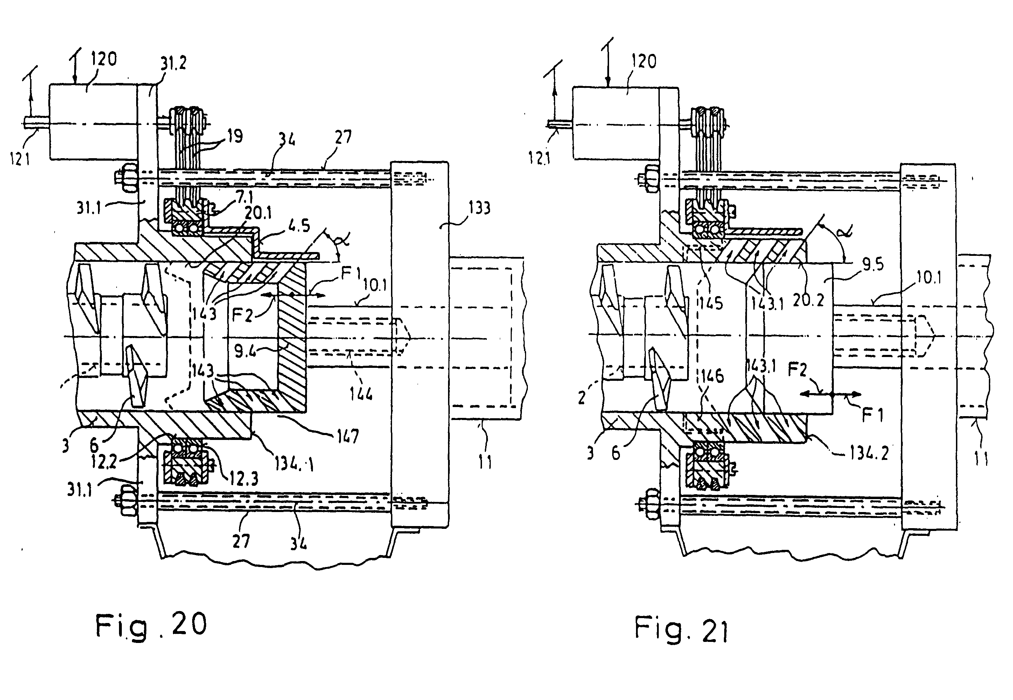

Die Fig. 20 zeigt insofern eine Variante des Kopfteiles von Fig. 19 als das Gegendruckglied 9.4 becherförmig geformt ist und durch die Becherwand 147 durchgehende Formlöcher 143 vorgesehen sind, welche über den Umfang verteilt sind und durch welche die von den Knetwerkzeugen 6 geförderte Produktmasse gepresst und von dem rotierenden Messer 4.5 auf eine vorgegebene Länge zu Pellets geschnitten wird. Die Formlöcher 143 sind, wie in Fig. 20 gezeigt, vorteilhafterweise mit einem Winkel Á geneigt angeordnet, können aber auch radial angeordnet sein.

Durch die Bewegungsrichtungen F.1 und F.2 des Gegendruckgliedes 9.4 einerseits und durch das Hineinragen des Gegendruckgliedes 9.4 mit der Becherwand 147 in die zylindrische Innenfläche 20.1 des zylindrischen Gehäusefortsatzes 134.1 andererseits, besteht die Möglichkeit, mehr oder weniger Formlöcher 143 offenzuhalten. Im weiteren besteht die Möglichkeit, das Gegendruckglied 9 ganz von der zylindrischen Innenfläche wegzuziehen, so dass die Produktmasse frei ausfliessen kann, was vorteilhaft ist, um eine Blokkierung der Masse in der Schnecke bei einer Störung zu verhindern.

Das Gegendruckglied ist mittels Gewinde 144 in der Kolbenstange befestigt und dadurch leicht auswechselbar.

Das becherförmige Gegendruckglied 9.4 wird von der zylindrischen Innenfläche 20.1 derart dicht geführt, dass keine Produktmasse entlang dieser Fläche nach aussen gelangen kann.

Die Fig. 21 zeigt insofern eine Variante der Fig. 20 als die Formlöcher 143.1 hier im zylindrischen Gehäusefortsatz 134.2 sind, und das Gegendruckglied 9.5 kolbenartig geformt und derart an der zylindrischen Innenfläche 20.2 des Gehäusefortsatzes 134.2 derart dicht geführt ist, dass keine Produktmasse an dieser Innenfläche 20.2 entlang nach aussen gelangen kann. Die Formlöcher 143.1 sind auch hier vorteilhafterweise mit einem Winkel Á geneigt angeordnet, können aber auch radial angeordnet sein.

Aufgrund der Bewegungsrichtungen F.1 und F.2 des Gegendruckgliedes 9.5 können mehr oder weniger Formlöcher 143.1 offen sein.

Die Anordnung der Formlöcher 143.1 kann, in Achsrichtung gesehen, in Reihen sein, es besteht aber auch die Möglichkeit, irgendeine andere Anordnung vorzusehen, was auch für die Formlöcher 143 der Fig. 20 gilt.

Der zylindrische Gehäusefortsatz 134.2 kann, wie mit gestrichelten Linien dargestellt, mittels eines Innengewindes 145 und einem Gewindefortsatz 146 in zwei Teile geteilt werden.

Die übrigen, mit bekannten Bezugszeichen versehenen Elemente der Figuren 20 und 21 entsprechen bereits früher Beschriebenem.

Zur Anwendung der bisher beschriebenen Vorrichtungen, bestehen folgende Steuerungsvarianten, welche durch die Stell- und Steuerungsanlage 117 durchgeführt werden:
1. Eine sogenannte "Druckmess-Steuerung" zur Verwendung der Schneckenpresse mit den Kopfteilen gemäss den Figuren 1 bis 12 und 19 bis 21 funktioniert folgendermassen:
   Der Druckzylinder 11 des Gegendruckgliedes 9 wird jeweils mit einem relativ zum gewünschten Endprodukt empirisch ermittelten hydraulischen Druck beschickt, so dass sich in der Schneckenpresse ein entsprechender Betriebsdruck und daraus folgend, ein entsprechender Querschnitt des Endproduktes einstellt. Dieser erstgenannte Druck wird von der Steuerung überwacht und innerhalb eines Toleranzbereiches eingehalten.
   Diese Druckeinstellung geschieht unter Einhaltung folgender vorgegebener Betriebsparameter:
   Mischung und Menge (kg/h) des Eingabeproduktes, Dampf- und/oder Wassermenge, bei vorgegebener Temperatur in vorgegebener Relation zur vorgenannten Produktmenge, Einstellung der Knetelemente (falls vorhanden) Drehzahl der Schnekkenwelle, Umfangsgeschwindigkeit des Messers, Erreichen einer, mittels eines Temperaturfühlers 16 gemessenen Temperatur der Produktmasse und Erreichen einer vorgegebenen Motorenleistung des Antriebes der Schneckenwelle.
   Sollte sich der Druck in der Schneckenpresse aus irgendeinem Grunde derart verändern, dass sich dabei die Lage des Gegendruckgliedes ausserhalb eines vorgegebenen Druck-Toleranzbereiches befindet, so wird der Druck im Druckzylinder 11 automatisch mittels der Steuerung so weit verkleinert, dass das Gegendruckglied, unter Alarmgebung, so weit zurückweichen kann, dass dem Produkt freier Auslass gewährt wird, was entweder einem Blockieren der Schnecke oder einer Produktion eines nicht brauchbaren Endproduktes vorbeugt.
2. Eine sogenannte "Wegmess-Steuerung" zur Verwendung derselben Schneckenpresse mit denselben Kopfteilen wie für die vorangehende Steuerung erwähnt, arbeitet unter denselben vorausgesetzten Betriebsparameter, allerdings zusätzlich wird hier noch der Druck in der Schneckenpresse mittels des Drucksensors 17 gemessen, um bei Erreichen einer vorgegebenen, mittels der Temperaturfühler 16 gemessenen Temperatur in der Schneckenpresse der Druckzylinder 11 des Gegendruckgliedes 9 mit einem relativ zum gewünschten Endprodukt empirisch ermittelten, hydraulischen Druck beschickt, so dass sich in der Schneckenpresse ein entsprechender Betriebsdruck und eine vorgegebene Lage (auch Weg genannt) des Kolbens des Zylinders 11 und damit des Gegendruckgliedes 9 einstellt. Dieser Weg wird mit Hilfe der Wegmessung 118 (auch Lagemessung genannt) gemessen.
   Ausserhalb dieses Weg-Toleranzbereiches wird dem Produkt, wie früher erwähnt, freier Auslass gewährt.
   Damit stellt sich ein vorgegebener Querschnitt des Endproduktes ein. Dieser Querschnitt (entsprechend mit der Lage des Gegendruckgliedes 9) wird mit Hilfe des Kolbenwegmess-Sensors 118, innerhalb eines vorgegebenen Toleranzbereiches von der Steuerung eingehalten.
3. Eine dritte mögliche Steuerung besteht darin, dass der Kolben des Zylinders 11 und damit die Lage des Gegendruckgliedes 9 durch irgendwelche Mittel, beispielsweise einem einstellbaren Klemmelement (nicht gezeigt) für den Betrieb blockiert wird, um dem Endprodukt eine absolute Konstanz im Querschnitt zu ermöglichen. Eine solche Voraussetzung an den Querschnitt benötigt eine Steuerung, in welcher die zu verändernden Parameter, wie beispielsweise Eingangsproduktmenge 159, eingespeiste Wasser und/oder Dampfmenge in die Dosiereinheit 124 und/oder direkt in die Schneckenpresse 1, erzeugte Zusatzwärme über das Heizelement 149, Stellung der Knetelemente 98, Drehzahl der Schneckenwelle 2, Temperatur und/oder Druck in der Schnecke, in der Steuerung anzeigt und das gewünschte Produkt durch manuelle Einstellungen, nach dem Prinzip "trial and error" oder automatisch aufgrund eines empirisch ermittelten und statistisch ausgewerteten Rezeptes gesteuert bzw. geregelt, hergestellt wird, wobei auch im letzteren Falle Korrekturmöglichkeiten, d.h. Eingriffe in das Rezept möglich sein müssen, um bei Abweichungen von einem entsprechenden Produkt-SOLL-Wert sich anpassen zu können.

Dazu dienen folgende zusätzliche Erklärungen zu dem bereits zu Fig. 17 Gesagten:
1. Die Anzahl der Anzeigemittel 128 ist in Fig. 17, wie bereits erwähnt, lediglich symbolisch, es versteht sich, dass für alle vorerwähnten, für die Steuerung der Anlage notwendigen Parameter, Anzeigemittel vorgesehen sind.
2. Für alle vorerwähnten, für die Steuerung der Anlage notwendigen Parameter weist die Steuerung nicht dargestellte, Steuerelemente auf, deren Befehle mittels Steuerleitungen 160 an die zu steuernden Elemente gehen, beispielsweise zur Steuerung der Drehzahl der Dosiereinheit 124 bzw. der Schnecke bzw. der Schneckenwelle 2 bzw. des Messers 4 oder zur Steuerung des Druckes der Hydrauliksteuerung 119 bzw. 129 für die Lage des Gegendruckgliedes 9 bzw. der Lage der Kolbenstange 112, wie auch zur Steuerung der Wasser- und/oder Dampfmenge bei vorgegebener Temperatur mittels der Reguliereinrichtungen 127. Ebenso je sind Signalleitungen 161 vorgesehen, um beispielsweise die Drehzahl der Antriebe für die Schneckenwelle 2, buw. der Dosiereinheit 124 oder dem Messer 4 und um die Wegsignale des Kolbenwegmessers 118 und Kolbenwegmesssteuerungen 119 bzw. 129 und die Temperatursignale der Temperaturfühler 16 bzw. das Drucksignal des Druckfühlers 12 an die Stell- und Steuerungsanlage 117 weiterzuleiten.
   Letztlich sind Zuleitungen 162 vorgesehen, um Wasser und/oder Dampf in die Dosiereinheit 124 und in die Schnecke 1 zu leiten bzw. um ein hydraulisches Druckmedium über die Hydrauliksteuerung 129 bzw. 119 in den Verschiebezylinder 111 bzw. 11 zu- bzw. abzuführen (letzteres nicht dargestellt). Ebenfalls ist ein Uebertrieb 163, um das Drehmoment des Messerantriebes an das Messer 4 zu übertragen, vorgesehen.

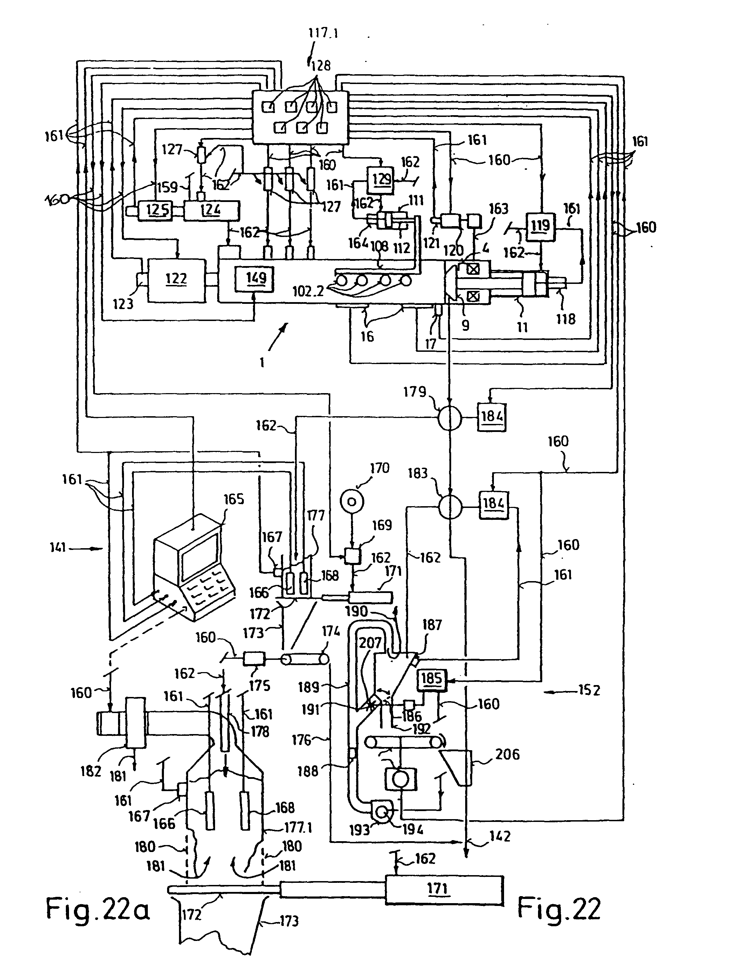

Eine Ergänzung der drittgenannten möglichen Steuerung zeigt Fig. 22, indem hier das Produkt, welches automatisch aufgrund eines empirisch ermittelten und statistisch ausgewerteten Rezeptes gesteuert bzw. geregelt hergestellt wird, zusätzlich on-line überwacht wird.

Diese on-line-Ueberwachung besteht zum einen aus einer Qualitätskontrolle 141 bezüglich Feuchtigkeit, Fettgehalt, Gelatinisierungsgrad, Eiweissgehalt und - falls notwendig - bezüglich der Zusammensetzung der Rohprodukte als Kontrolle des in die Dosiereinheit eingegebenen Eingangsproduktes 159.

Eine solche Qualitätskontrolle wird von der Anmelderin hergestellt und existiert im Markt unter dem Markennamen NIRVIS. Bei diesem Verfahren handelt es sich um eine Schnellbestimmung von Schüttgütern mittels Spektralanalyse, welche im Wellenlängenbereich des "nahen Infrarot" (NIR) zwischen 800 nm und 2500 nm liegt.

Ca. jede Minute kann ein Batch (auch gelegentlich "Portion" genannt) kontrolliert werden, um das Resultat der Steuerung 117 einzugeben und gegebenenfalls die früher erwähnten Korrekturen am Rezept durchzuführen. Diese Qualitätskontrolle umfasst ein NIRVIS-Steuergerät 165, welches hier, der Einfachheit halber, mit einer symbolischen Figur dargestellt ist. Das Gerät erhält über Signalleitungen 161 Signale eines NIRVIS-Messkopfes 166, welcher im Produkt eingetaucht ist und während einer vorgegebenen Zeit das Produkt überprüft.

Eine Temperatursonde 168, welche ebenfalls im Produkt steckt, gibt dem Steuergerät 165 die Temperatur des Produktes, so dass die Auswertung des Resultates in Abhängigkeit der Temperatur durchgeführt werden kann. Das zu messende Produkt ist mittels einer Rohrweiche 179, welche von einem von der Steuerung 117.1 gesteuertem Antrieb 184 von Endproduktstrom 142 abgezweigt und über eine Zuleitung 162 in ein Sammelgefäss 177 geleitet worden.

Das Sammelgefäss 177 wird zum Zeitpunkt des Einfüllens durch einen Abschlussschieber 172 abgeschlossen und ein Vollstandssensor 167 meldet über eine Signalleitung 161 den Vollstand des Gefässes 177 einerseits der Steuerung 117.1, welche dafür sorgt, dass die Rohrweiche 179 wieder auf "Durchlass" geschaltet wird und andererseits wird das Vollstandssignal der NIRVIS-Steuerung 165 zugeleitet, so dass die Messung bei gefülltem Sammelgefäss durchgeführt werden kann.

Nachdem die NIRVIS-Steuerung 165 das Resultat an die Steuerung 117.1 weitergeleitet hat, gibt diese Steuerung einen Befehl über eine Steuerleitung 160 an ein Steuerventil 169, so dass von einer Druckluftquelle 170, die daher stammenden Druckluft über eine Zuleitung 162 in einen Zylinder 171 gelangen kann, um dadurch den Abschluss-Schieber 172 zurückzuziehen und das Produkt in einen Sammeltrichter 173 und einen ersten Teil davon, auf ein Dosierförderband 174 zu führen, welches aufgrund eines Antriebes 175 dauernd in Betrieb ist, und das Produkt aus dem Sammeltrichter über eine Produktförderung 176 dem laufenden Endprodukt 142 wieder zuführt. Der Antrieb 175 wird über eine Steuerleitung 160 von der Steuerung 117.1 gesteuert.

Eine weitere Qualitätskontrolle 152 dient, um die Abriebsfestigkeit des Produktes zu kontrollieren und besteht aus einer in der europäischen Patentschrift 0 040 406 B1 in Fig. 8 gezeigten und beschriebenen Vorrichtung. Diese Patentschrift gilt demnach als integrierender Teil dieser Anmeldung, mindestens was das Prinzip und die wesentlichen Elemente betrifft, gewisse Zusätze bzw. Abweichungen davon sind später beschrieben. Trotzdem sei kurz die Funktion dieser Vorrichtungen anhand der in dieser Anmeldung gezeigten Figur nochmals erklärt.

Wie bezüglich der vorerwähnten Qualitätskontrolle mit dem NIRVIS-Verfahren erklärt, wird auch hier das Produkt batchweise kontrolliert. Zu diesem Zwecke wird die Rohrweiche 183 aufgrund eines über die Steuerleitung 160 von der Steuerung 117.1 erhaltenen und an den Antrieb 184 weitergegebenen Befehles für eine vorgegebene Zeit (in der Steuerung 117.1 eingegeben) umgeschaltet, so dass Produkte über eine Zuleitung 162 in einen Sammeltrichter 187 gegeben wird. Zu diesem Zeitpunkt ist eine Umstellklappe 186 so gestellt, dass das Produkt durch das Zuleitrohr 191 nach unten, mit Blick auf die Figur gesehen, gleitet, bis dieses auf einem, in ganzen Querschnitt eines Förderrohres 189 vorgesehenen Sieb 188 aufliegt. Die Stellung der Klappe 186 wurde durch ein Steuergerät 185 verursacht, welches den Befehl für das Umklappen zur gleichen Zeit erhält wie die Rohrweiche 183 und zwar über eine Steuerleitung 160.

Mittels einer weiteren Steuerleitung 160 schaltet das Steuergerät 185 einen Förderluftventilator 193 ein, welcher das Produkt vom Sieb 188 abhebt und während einer im Steuergerät 185 vorgegebenen Zeit im gezeigten Rundlauf (siehe Pfeile im Rohr 189 und 191 und im Trichter 187) über den Sammeltrichter 187 laufen lässt, so dass das Produkt an Schikanen, welche im Rohr 189 enthalten - und hier nicht gezeigt sind - belastet wird, und bei diesem Rundlauf Abrieb entstehen kann. Dieser Rundlauf geschieht mit einer ersten Geschwindigkeitsstufe des Ventilators 193, welche erlaubt, dass die Geschwindigkeit der Luft im Rohr 189 genügend gross ist, um das gesamte Produkt zu fördern. Dabei ist die Zuluft zum Ventilator mit 194 und die Abluft aus dem Sammeltrichter 187 mit 190 gekennzeichnet, d.h. dass Rundlauf der nur das Produkt, jedoch nicht die Luft betrifft.

Nach einer vorgegebenen Zeit schaltet das Steuergerät 185 den Ventilator auf eine zweite Drehzahlstufe, welche die Drehzahl bzw. die Luftgeschwindigkeit im Förderrohr 189 so weit reduziert, dass der grobe Anteil nicht mehr mitgenommen wird, sondern liegenbleibt und nur der Feinanteil (Abrieb) in den Trichter 187 gefördert wird. Gleichzeitig wird auch die Klappe 186 so gestellt, dass dieser im Sammeltrichter 187 gelangende Feinanteil durch ein Ableitrohr 192 auf eine Bandwaage 195 geführt wird, um auf dieser Bandwaage ausgewogen zu werden, und das Resultat über eine Signalleitung 161 an die Steuerung 117.1 zu leiten.

Die Bandwaage führt das Produkt in einen Beimischtrichter 206 und damit in den Lauf des Endproduktes 142 zurück.

Es sei noch erwähnt, dass im Zuleitrohr 191 eine Drehschleuse 207 vorgesehen ist, um zu verhindern, dass die Förderluft durch das Zuleitrohr 191 in den Sammeltrichter 187 gelangen kann statt in das Rohr 189. Die Schleuse 207 wird ebenfalls von der Steuerung 185 gesteuert, was jedoch hier der Einfachheit halber, nicht gezeigt ist, und rotiert solange die Klappe 186 für den Rundlauf des Produktes eingestellt ist.

Die Fig. 22 A zeigt insofern eine Variante gegenüber der Figur 22 als hier ein Sammelgefäss 177.1 mit Lochblechen 180 versehen ist, durch welche eine Kühlluft 181 in das sich im Sammelgefäss 177.1 befindliche Produktströmen kann, die ihrerseits von einem Kühlluftventilator mit Antriebsmotor 182 angesaugt und wieder in die Atmosphäre abgegeben wird. Der Motor des Ventilators 182 wird mittels einer Steuerleitung 160 von NIRVIS-Steuergerät 165 ein- und ausgeschaltet. Ein Produktzufuhrrohr 178 führt das Produkt der Zuleitung 162 derart durch den Kühlluftkanal, dass dieses unbeschadet im Sammelgefäss 177.1 gesammelt werden kann.

Die übrigen Elemente mit gleichen Funktionen weisen dieselben Bezugszeichen auf und sind hier nicht nochmals beschrieben.

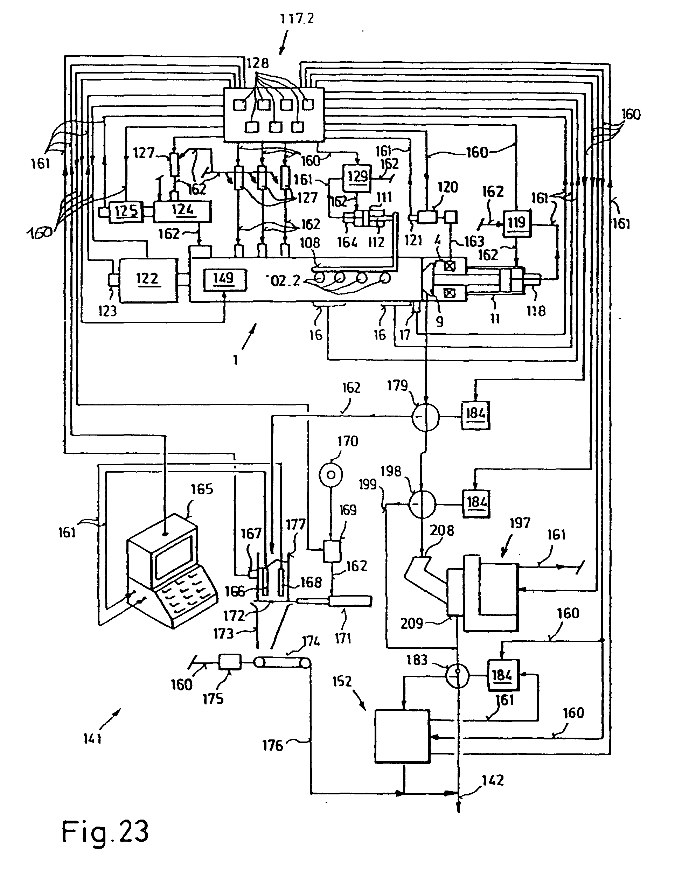

Die Anlage der Fig. 23 zeigt insofern eine Variante gegenüber der Anlage der Fig. 22 auf, als zwischen den Qualitätskontrollen 141 und 152 eine Würfelpresse 197 vorgesehen ist. Das Produkt gelangt nach der Rohrweiche 179 und nach dem Passieren der Rohrweiche 198 in einen Einlauf 208 der Würfelpresse 197 und wird nach der Verarbeitung durch die Würfelpresse an einen Auslauf 209, wieder abgegeben.

Eine solche Würfelpresse ist an sich bekannt und wird von der Anmelderin in verschiedenen Grössen unter dem Handelsnamen "KUBEX" weltweit vertrieben, weshalb auf eine nähere Beschreibung der Einfachheit halber, verzichtet wird. Es versteht sich, dass dabei die Leistung dieser Würfelpresse 197 der Leistung der Schneckenpresse 1 angepasst wird.

Die Würfelpresse 197 ist mittels der Rohrweiche 198 umgehbar, indem entsprechend von einer Stell- und Steuerungsanlage 117.2 ein Steuerbefehl über eine Steuerleitung 160 an den Antrieb 184 der Rohrweiche 198 gegeben wird, so dass das Produkt über die Umleitung 199 nach der Würfelpresse 197 wieder in den Produktstrom geleitet werden kann.

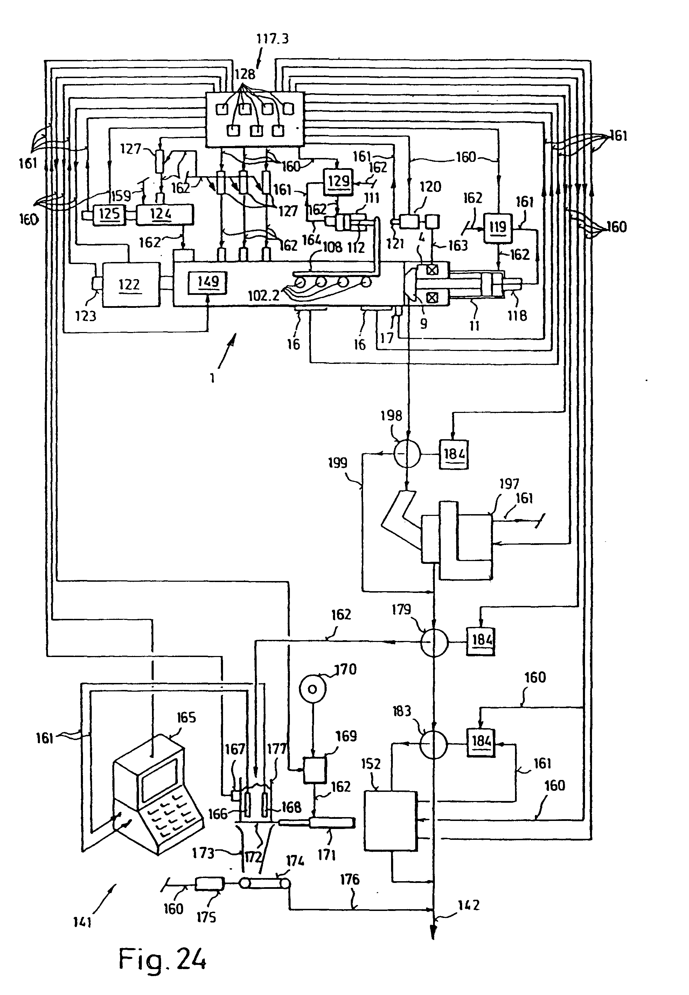

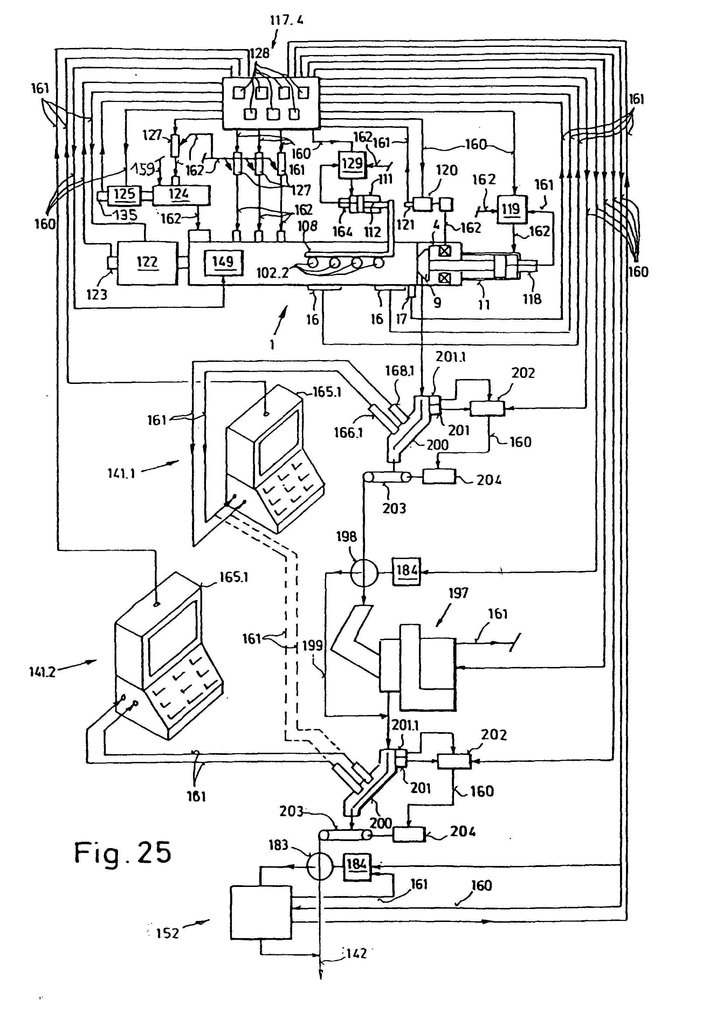

Das Produkt, welches die Schneckenpresse 1 im Bereich des Gegendruckgliedes 9 verlässt, ist mit entsprechenden Pfeilen dargestellt, wobei das Endprodukt in diesem Falle nach der Würfelpresse 197 mit 142 gekennzeichnet ist. Dies gilt nicht nur für diese Fig. 23, sondern auch für die noch zu beschreibenden Fig. 24 und 25.

Zur Prüfung des von der Schneckenpresse 1 abgegebenen Produktes wird die Rohrweiche 179, wie bereits im Zusammenhang mit der Fig. 22 beschrieben, umgestellt, und das geprüfte Produkt gelangt, wie bereits für die Fig. 22 beschrieben, wieder zum Endprodukt 142.

Die Funktionen für die Qualitätskontrolle 141 sind wie die für die Fig. 22 beschriebenen, wobei auch hier die Variante der Fig. 22A gewählt werden kann.

Nach der Würfelpresse 197 wird das Produkt in vorgegebenen Zeitabständen von der Qualitätskontrolle 152 geprüft, wobei auch hier die Funktionen dieselben sind, wie bereits für Fig. 22 beschrieben.

Die Chargen für die Qualitätskontrolle 141, wie auch für die Qualitätskontrolle 152 sind wählbar, wobei für die Qualitätskontrolle 141 der Vollstandssensor 167 das Mass gibt, und für die Qualitätskontrolle 152, wie bereits früher erwähnt, ein Zeitglied der Stell- und Steuerungsanlage 117.2 den Takt für das Umstellen der Rohrweiche 183 gibt.

Die Anlage der Fig. 24 zeigt insofern eine Variante gegenüber der Anlage der Fig. 23, als hier die Würfelpresse 197 samt der Umgehung 199 vor den Qualitätskontrollen 141 und 152 vorgesehen ist.

Die eigentlichen Schaltfunktionen für die Würfelpresse 197 wie auch für die Qualitätskontrolle 141 und 152 entsprechen denjenigen für die Fig. 23 beschriebenen, weshalb der Einfachheit halber diese nicht wiederholt werden.

Die Fig. 25 verwendet als Qualitätskontrolle zur Ueberprüfung der Feuchtigkeit, Fettgehalt, Gelatinisierungsgrad, Eiweissgehalt und gegebenenfalls Zusammensetzung der Rohprodukte des Produktes nicht wie für die Fig. 22 bis 24 beschrieben, ein sogenanntes NIRVIS-Gerät, sondern ein ebenfalls von der Anmelderin weltweit vertriebenen Gerät mit dem Markennamen NIRDAS.

Der Unterschied besteht darin, dass mittels der NIRDAS-Qualitätskontrolle 141.1 und/oder 141.2 das Produkt direkt on-line im Hauptproduktstrom gemessen wird.

Dementsprechend gelangt das von der Schneckenpresse 1 abgegebene Produkt in ein Durchlaufgefäss 200, in welchem dieses, bis zu einer an diesem Durchlaufgefäss 200 angebrachten Niveau-Sonde 201 aufgestaut wird, worauf ein mit der Niveau-Sonde 201 verbundenes Steuergerät 202, über eine Steuerleitung 160, einen Antrieb 204 für ein nach dem Durchlaufgefäss 200 vorgesehenes Dosierförderband 203 mit einer ersten Geschwindigkeit einschaltet. Diese erste Geschwindigkeit des Dosierförderbandes 203 ist so gewählt, dass das sich im Durchlaufgefäss 200 befindliche Produkt noch weiter ansteigt, bis zur Niveau-Sonde 201.1, welche sich oberhalb der Niveau-Sonde 201 befindet, worauf das Steuergerät 202 aufgrund des Signales der Niveausonde 201.1, das Dosierförderband 203 mit einer zweiten Geschwindigkeit antreiben lässt, welche das Produkt-Niveau im Durchlaufgefäss 200 wieder bis zur Niveau-Sonde 201 absinken lässt, worauf erneut die erste, langsamere Geschwindigkeit des Dosierförderbandes 203 auf das Steuergerät 202 eingeschaltet wird. Auf diese Weise ist es möglich, im Durchlaufgefäss 200 einen Füllungsgrad aufrechtzuerhalten, welcher für eine korrekte Messung mit einem Messkopf 166.1 einer NIRDAS-Steuerung 165.1 notwendig ist.

Zusätzlich ist ebenfalls eine Temperatursonde 168.1 vorgesehen und der Messkopf 166.1, wie auch die Temperatursonde 168.1 geben ihre Signale über Signalleitungen 161 an die NIRDAS-Steuerung 165.1 ab.

Die NIRDAS-Steuerung 165.1 gibt das ermittelte Resultat über eine Signalleitung 161 an die Stell- und Steuerung 117.4, welche bei Abweichungen eines vorgegebenen SOLL-Wertes für mindestens einen bereits früher erwähnten Produktparameter, Feuchtigkeit, Fettgehalt, Gelatinisierungsgrad, Eiweissgehalt und gegebenenfalls Zusammensetzung des Rohproduktes, entweder ein Alarmsignal abgibt oder am Rezept für den entsprechenden Fall vorbestimmte Korrekturen durchführt. Dabei ist ein Toleranzband für den SOLL-Wert gegeben, innerhalb welchem die vorgenannte Korrektur durchgeführt werden soll.

Das Dosierförderband 203 gibt das Produkt weiter an eine bereits beschriebene Würfelpresse 197, welche, wie bereits für die Fig. 24 beschrieben, mittels der Rohrweiche 198 und der Umleitung 199 umgangen werden kann.

Nach der Würfelpresse 197 ist in dieser Variante eine zweite Qualitätskontrolle der mit 141.1 bezeichneten Art, welche jedoch an dieser Stelle mit 141.2 gekennzeichnet ist.

Das ganze Messverfahren und alle dazu notwendigen Elemente entsprechen dem bereits für die Qualitätskontrolle 141.1 durchgeführten, weshalb diese hier nicht nochmals beschrieben werden.

Hingegen sei mit Hilfe der mit gestrichelten Linien gezeichneten Signalleitungen 161 dargestellt, dass eine Möglichkeit besteht, die Qualitätsmessung vor der Würfelpresse, wie auch nach der Würfelpresse alternativ mit einem einzigen NIRDAS-Gerät durchzuführen, so dass die beiden Resultate alternativ mit dem in die Steuerung 117.4 eingegebenen SOLL-Wert verglichen werden und an der Würfelpresse der Abstand zwischen den an sich bekannten Rollen und der an sich bekannten Ringform als Verfahrensparameter zu verändern. Ebenfalls besteht die Möglichkeit, was auch für die mit den Fig. 23 und 24 beschriebenem Anlage gilt, dass die aufgenommene Leistung des Würfelpressen-Antriebes mittels einer Signalleitung 161 (welche hier nur teilweise dargestellt ist), in die Stell- und Steuerungsanlage 117.4 gegeben wird, um in Kombination des genannten Abstandes als Verfahrensparameter verwendet zu werden.

Die Möglichkeit und Art der Verstellung des vorgenannten Abstandes zwischen den Rollen und der Ringform ist in den europäischen Patentanmeldungen mit den Veröffentlichungsnummern 231 764 und 371 519 gezeigt und beschrieben und bilden einen integrierenden Bestandteil für diese Anmeldung, weshalb auf eine weitere Beschreibung verzichtet wird.

Was die Rückmeldung der Motorenleistung als Verfahrensparameter mittels der Signalleitung 161 betrifft, gilt selbstverständlich auch für die mit den Fig. 23 und 24 beschriebenen Anlagen.

Anstelle der vorgenannten alternativen Messung mittels nur einem Gerätes 165.1 wird in dieser Fig. das von der Würfelpresse 197 abgegebene Produkt, wie in der Anlage der Fig. 24 ebenfalls möglich, mittels der Qualitätskontrolle 141.2 durchgeführt, wobei alle bisher für die Durchführung der Qualitätskontrolle 141.1 erwähnten Elemente gleich sind und deshalb nicht wieder beschrieben werden.

Das Produkt, welches vom Dosierförderband 203 der zweiten Messung abgegeben wird, wird mit der bereits für die Fig. 23 und 24 beschriebenen Weise mit Hilfe der Qualitätskontrolle 152 kontrolliert und die entsprechenden Resultate in gleicher Weise der Steuerung 117.4 eingegeben.

Vorzugsweise weisen die Steuerungen 117 bis 117.4 einen Rechner auf, um die erwähnten Korrekturen der entsprechenden Rezepte durchzuführen, um dadurch ein optimiertes Endprodukt 142 aufgrund aller gemessenen Resultate und entsprechend eingestellten Parameter zu erhalten.

Grundsätzlich besteht die Möglichkeit die on-line-Messung für mindestens eine der folgenden Eigenschaften
- Feuchtigkeit
- Gelatinisierungsgrad
- Fettanteil
- Eiweissanteil entweder
nach der Schneckenpresse
oder
nach der Würfelpresse
oder
nach der Schneckenpresse und nach der Würfelpresse vorgesehen sein.

Dasselbe gilt auch für die on-line Messung für die Abriebfestigkeit, nämlich dass diese entweder vor der Schneckenpresse oder
nach der Würfelpresse
oder
nach der Schneckenpresse und nach der Würfelpresse vorgesehen ist. Im weiteren besteht auch die Möglichkeit, dass die on-line-Messung für eine der folgenden Eigenschaften
- Feuchtigkeit
- Gelatinisierungsgrad
- Fettanteil
- Eiweissanteil
vor oder nach der on-line Messung für die Abriebfestigkeit vorgesehen sein kann.

### Legende

- 1, 1.1: Schneckenpresse/Expander
- 2: Schneckenwelle
- 3: Gehäuse
- 4, 4.1, 4.2 4.4, 4.5: Messer
- 6: Knetwerkzeuge
- 7, 7.1: Tragring
- 8 bis 8.3: Durchtrittsöffnung
- 9, 9.3, 9.4, 9.5: Gegendruckglied
- 10, 10.1: Kolbenstange
- 11: Kolben-Zylinder-Einheit
- 12. 12.1. 12.2. 12.3: Wälzlager
- 13: Tragkörper
- 14: Stellschraube
- 15: Freiraum
- 16: Temperaturfühler
- 17: Druckfühler
- 18: Messerfuss
- 19: Keilriemen
- 20: Zylindrische Innenfläche
- 21: Zwischenring
- 22: Stütz- und Lagerring
- 23 bis 23.3: Zwischenzahnring
- 24 bis 24.2: Zwischenzahn
- 25 und 25.1: Nutenwand
- 26, 26.2: Zahn
- 26a: Auswechselbarer Zahn
- 27: Verbindungsholmen
- 28: Schlitzgrundfläche
- 29: Halteplatte
- 30: Pressschnecke - Fig. 11
- 31, 31.1, 31.2: Gehäuseflansch
- 32: Träger - Fig. 11
- 34 und 34.1: Schrauben
- 35: Staudruckzahn
- 36: Staudruckzahnträger
- 37: Welle
- 38: Mitnehmerkeil
- 39: Druckfeder
- 41: Schneckenwelle
- 42: Gehäuse
- 43: Schneckenwindung
- 44: Pressstempel
- 45: Formkanal
- 46: Zwischenstück
- 47: Formwand
- 48: Nute
- 49: Nute Ring
- 50: Ring-Gewinde
- 51: Führungskeil
- 53: Wälzlager
- 54: Gewindeantrieb
- 56: Antriebsritzel
- 57: Antriebswelle
- 60: Absaugeinrichtung
- 61: Dichtung
- 62: Tragscheibe
- 63: Antriebsriemen
- 64: Wälzlager
- 65: Presstempelstütze
- 66: Lagerzylinder
- 67: Stellschraube
- 68: Staudruckzahn
- 69: Staudruckzahnträger
- 70: Pressschnecke
- 71 und 71.1: Untere Gehäusehälfte
- 72 und 72.1: Unterer Gehäuseflansch
- 73: Vorderer unterer Gehäuseflansch
- 74: Knetelemente
- 75: Zwischenräume
- 76: Auflagefläche
- 77: Stützelemente
- 78: Zwischenräume
- 79: Schneckenwelle
- 80 und 81: Stab
- 82: Knetelemente
- 83 und 83.1: Obere Gehäusehälfte
- 84: Scharniere
- 85 und 85.1: Vordere, obere Flanschhälfte 1
- 86: Gegengewindering
- 87: Gewinderingträger
- 88: Führungsring
- 89: Anschlagring
- 90: Schraube
- 91 und 92: Zähne
- 93: Dichtung
- 94: Stütz- und Lagerring
- 95: Verbindungsschraube
- 96 und 97: Gegenflansch
- 98: Drehbares Knetelement
- 99: Ebene Knetfläche
- 100: Konvexe Knetfläche
- 101: Gewinde
- 102 bis 102.2: Drehknopf
- 103 und 104: Verschieberichtung
- 105: Anzeigeskala
- 106: Oberer Gehäuseflansch
- 107: Verschieberichtung
- 108: Zahnstange
- 109 und 110: Gleitführungen
- 111: Verschiebezylinder
- 112: Kolbenstange
- 113: Verbindungselement
- 114: Trägerelement
- 115: Zahnkranz
- 116: Anzeigepfeil
- 117 bis 117.4: Stell- und Steuerungsanlage
- 118: Kolbenwegmessensor
- 119: Hydrauliksteuerung
- 120: Antrieb für Messer
- 121: Drehzahlüberwachung
- 122: Antrieb für Schnecke
- 123: Drehzahlüberwachung
- 124: Dosiereinheit
- 125: Antrieb für Dosiereinheit
- 127: Reguliereinrichtung für Dampf oder Wasser
- 128: Anzeigemittel
- 129: Hydrauliksteuerung
- 133: Tragflansch von 11
- 134 bis 134.2: zylindrischer Gehäusefortsatz
- 135: Drehzahlüberwachung
- 141, 141.1, 141.2: Qualitätskontrolle bezüglich Feuchtigkeitsgehalt, Gelatinisierungsgehalt, Fettgehalt und Eiweissgehalt
- 142: Endprodukt
- 143, 143.1: Formlöcher
- 144: Gewinde
- 145: Innengewinde
- 146: Gewindefortsatz
- 147: Becherwand
- 149: Heizelement
- 152: Qualitätskontrolle bezüglich Abrieb
- 159: Eingangsprodukt
- 160: Steuerleistungen
- 161: Signalleitungen
- 162: Zuleitungen
- 163: Uebertrieb
- 164: Kolbenwegmess-Sensor
- 165: NIRVIS-Steuerung
- 165.1: NIRDAS-Steuerung
- 166: NIRVIS-Messkopf
- 166.1: NIRDAS-Messkopf
- 167: Vollstandssensor
- 168, 168.1: Temperatursonde
- 169: Steuerventil
- 170: Druckluftquelle
- 171: Zylinder-Kolben-Einheit
- 172: Abschluss-Schieber
- 173: Sammeltrichter
- 174: Dosierförderband
- 175: Antrieb zu 174
- 176: Produktförderung
- 177, 177.1: Sammelgefäss
- 178: Produktzufuhrrohr
- 179: Rohrweiche
- 180: Lochblech
- 181: Kühlluft
- 182: Kühlluftventilator mit Antriebsmotor
- 183: Rohrweiche
- 184: Antrieb für Rohrweiche 183, 289 und 198
- 185: Steuergerät
- 186: Umstellklappe
- 187: Sammeltrichter
- 188: Sieb
- 189: Förderrohr
- 190: Abluft
- 191: Zuleitrohr
- 192: Ableitrohr
- 193: Förderluftventilator
- 194: Zuluft
- 195: Bandwaage
- 197: Würfelpresse
- 198: Rohrweiche
- 199: Umleitung
- 200: Durchlaufgefäss
- 201, 201.1: Niveausonde
- 202: Steuergerät
- 203: Dosierförderband
- 204: Antrieb für 203
- 206: Beimischtrichter
- 207: Drehschleuse
- 208: Einlauf von 197
- 209: Auslauf

## Patentansprüche

1. Schneckenpresse (1) mit einer in einem Gehäuse (3) dreh- und antreibbar angeordneten Knet- und Pressschnecke, und einem daran anschliessenden Pressenkopf in welchem das Futtermittel in eine vorgegebene Form gepresst wird,
- mit einem Gegendruckglied und
- einem am Gehäuse (3) anschliessenden, das Gegendruckglied (9), in axialer Richtung gesehen, mindestens teilweise umschliessenden ringförmigen Körper (23),
- wobei zur Querschnittsformgebung des Produktes das Gegendruckglied (9) und/oder der ringförmige Körper (23, 49), Formkanäle (8, 45) von vorgegebener Form aufweist, und im weiteren Mittel vorgesehen sind, um die Längsform des Futtermittels zu verändern,
und zusätzliche Zwischenkörper (46) vorgesehen sind, welche in die Formkanäle (8, 45) des Gegendruckgliedes (9) hineingreifen und dabei zusammen mit den Formkanälen (8, 45) den Querschnitt des Produktes bilden, dadurch gekennzeichnet, dass zur Veränderung dieses Querschnittes die Zwischenkörper (46) derart federnd am ringförmigen Körper (23, 49) angeordnet sind, dass die Zwischenkörper (46) durch weitere Mittel (50, 51, 54, 56, 57) radial nach innen und durch Federungseigenschaft eigenständig wieder nach aussen bewegbar sind und wobei am Gehäuse (72, 73) auswechselbar angeordnete Knetelemente (82) vorgesehen sind, welche in Unterbrüche (78) der Schneckenwindungen (74) greifen, und die Knetelemente (82) verstellbar angeordnet sind.

2. Schneckenpresse nach Anspruch 1, dadurch gekennzeichnet, dass um die Zwischenkörper (46) radial zu bewegen, einerseits Rampen am Zwischenkörper (46) vorgesehen sind und anderseits ein in axialer Richtung der Knet- und Pressschnecke über diese Rampen bewegbarer Ring (49) vorgesehen ist, welcher derart geformt ist, dass axiale Bewegungen des Ringes (49) die Zwischenkörper (46) in radialer Richtung nach innen bewegen.

3. Schneckenpresse nach Anspruch 2, dadurch gekennzeichnet, dass der bewegbare Ring motorisch verschiebbar ist.

4. Schneckenpresse nach Anspruch 1, dadurch gekennzeichnet, dass am Ausgang der Formkanäle (45) Mittel vorgesehen sind, um die Formkanäle (45) in Unterdruck zu versetzen.

5. Schneckenpresse nach Anspruch 1, dadurch gekennzeichnet, dass ein an den Austrittsenden der Formkanäle (45) vorbeibewegendes Messer (4) vorgesehen ist, wobei das Messer (4) unabhängig von der Schneckendrehzahl antreibbar ist.

6. Schneckenpresse nach mindestens einem der vorherigen Ansprüche 1 bis 5, dadurch gekennzeichnet, dass die Knetelemente (82) in radialer Richtung zur Schneckenpresse (1) gesehen, einen asymmetrischen Querschnitt aufweisen, dass das Gehäuse (72, 73) für das Auswechseln der Knetelemente (82) aufklappbar ist, dass die Knetelemente (82) dreh- und antreibbar sind, dass die Schneckenpresse (1) mindestens einen Stützring (77) aufweist, welcher die Schneckenwelle (79) mindestens an ihrem gegen den Pressstempel gerichteten Ende zusätzlich drehbar lagert.

## Claims

1. Screw press (1) with a kneading and pressing screw capable of being rotated and driven and arranged in a housing, and a press head connected to said screw, in which the feed material is pressed into a specified shape,
- with a counterpressure element and
- a ring-shaped body (23), connected to the housing (3), which at least partially encompasses the counterpressure element (9) seen in the axial direction,
- whereby, in order to provide the cross-sectional shaping of the product, the counterpressure element (9) and/or the ring-shaped body (23, 49) feature shaping channels (8, 45) of predetermined form, and in which media are provided to change the longitudinal shape of the feed, and additional intermediate bodies (46) are provided, which engage in the shaping channels (8, 45) of the counterpressure element (9) and in this situation, together with the shaping channels (8, 45), form the cross-section of the product, characterised in that, to change this cross-section, the intermediate bodies (46) are arranged under spring tension at the ring-shaped bodies (23, 49), that the intermediate bodies (46) are capable of being independently, by means of additional media (50, 51, 54, 56, 57), radially inwards and, thanks to their spring-loading property, moved outwards again, in which situation replaceable kneading elements (82) are provided for, arranged at the housing (72, 73), which engage in the subdivisions (78) of the screw windings (74), and the kneading elements (82) are arranged in an adjustable manner.

2. Screw press according to Claim 1, characterised in that, in order to move radially about the intermediate bodies (46), ramps are provided for on the one hand at the intermediate bodies (46) and, on the other, a ring (49) is provided for in the axial direction of the kneading and pressing screw, said ring being capable of being moved via these ramps and being shaped in such a way that axial movements of the ring (49) cause the intermediate bodies (46) to move in the radial direction inwards.

3. Screw press according to Claim 2, characterised in that the movable ring is capable of displacement by means of a motor.

4. Screw press according to Claim 1, characterised in that media are provided at the outlet of the shaping channels (45) in order to impose underpressure on the shaping channels (45).

5. Screw press according to Claim 1, characterised in that a blade (4) is provided which moves past at the outlet of the shaping channels (45), whereby the blade (4) is capable of being driven independently of the speed of rotation of the screw.

6. Screw press according to at least one of the forgoing Claims 1 to 5, characterised in that the kneading elements (82) present an asymmetric cross-section, seen in the radial direction to the screw press (1), that the housing (72, 73) is capable of tilting upwards for the replacement of the kneading elements (82), that the kneading elements (82) are capable of being rotated and driven, and that the screw press (1) features at least one support ring (77) which provides additional bearing support in a rotatable manner for the screw shaft (79), at least at the end of the shaft which is directed towards the press ram.

## Revendications

1. Boudineuse à vis (1) comprenant une vis de malaxage et de pression montée de façon à pouvoir tourner et être entraînée dans un carter (3) et une tête de compression lui faisant suite, dans laquelle les fourrages sont pressés pour prendre une forme prédéterminée,
- un organe antagoniste, et
- une structure annulaire (23) se rattachant au carter (3) et enveloppant, au moins partiellement, l'organe antagoniste (9), observé dans la direction axiale,
- l'organe antagoniste (9) et/ou la structure annulaire (23, 49) présentant des canaux conformateurs (8, 45) de forme prédéterminée, pour donner forme à la section transversale, et d'autres moyens étant encore prévus, pour modifier la forme longitudinale du fourrage,
et des structures intermédiaires supplémentaires (46) sont prévues, lesquelles s'engagent dans les canaux conformateurs (8, 45) de l'organe antagoniste (9) et forment ainsi conjointement avec les canaux conformateurs (8, 45) la section transversale du produit, caractérisée en ce que pour modifier cette section transversale, les structures intermédiaires (46) sont montées élastiquement sur la structure annulaire (23, 49) de façon à ce que les éléments intermédiaires (46) puissent se mouvoir radialement vers l'intérieur, grâce à d'autres moyens (50, 51, 54, 56, 57), et se remouvoir de manière autonome vers l'extérieur, par élasticité, et des éléments malaxeurs (82) montés de manière interchangeable sur le carter (72, 73) étant prévus, lesquels s'engagent dans des solutions de continuité (78) des pas (74) de la vis, et les éléments malaxeurs (82) étant montés de façon à pouvoir être ajustés.

2. Boudineuse à vis selon la revendication 1, caractérisée en ce que pour faire mouvoir les structures intermédiaires (46) radialement, on a prévu d'une part des rampes sur la structure intermédiaire (46) et, d'autre part, un anneau (49) mobile par dessus ces rampes dans la direction axiale de la vis de malaxage et de pression, lequel a une forme telle que des mouvements axiaux de l'anneau (49) déplacent les structures intermédiaires (46) radialement vers l'intérieur.

3. Boudineuse à vis selon la revendication 2, caractérisée en ce que l'anneau mobile est déplaçable par moteur.

4. Boudineuse à vis selon la revendication 1, caractérisée en ce que des moyens sont prévus à la sortie des canaux conformateurs (45), pour mettre les canaux conformateurs (45) sous vide partiel.

5. Boudineuse à vis selon la revendication 1, caractérisée en ce qu'une lame (4) passant devant les extrémités de sortie des canaux conformateurs (45) est prévue, ladite lame (4) pouvant être entraînée indépendamment de la vitesse de rotation de la vis.

6. Boudineuse à vis selon au moins l'une des revendications 1 à 5 qui précèdent, caractérisée en ce que les éléments malaxeurs (82) présentent une section transversale asymétrique, l'observation se faisant radialement dans la direction de la boudineuse à vis (1), en ce que le carter (72, 73) peut se rabattre pour le remplacement des éléments malaxeurs (82), en ce que les éléments malaxeurs (82) peuvent tourner et être entraînés, en ce que la boudineuse à vis (1) présente au moins une bague d'appui (77) dans laquelle est encore monté à rotation l'arbre (79) de la vis, au moins à son extrémité dirigée contre le piston de compression.
